# EUROPÄISCHE PATENTSCHRIFT

(11) **EP 1 426 314 B1**
(45) Veröffentlichungstag und Bekanntmachung des Hinweises auf die Patenterteilung: **31.08.2005**
(21) Anmeldenummer: 03024611.0
(22) Anmeldetag: 25.10.2003
(51) Int. Cl.: B65G 49/04

(54) **Vorrichtung und Verfahren zur Oberflächenbehandlung von Werkstücken**
Device and method for treating the surfaces of workpieces
Dispositif et procédé de traitement de surfaces de pièces

(30) Priorität: 02.12.2002 DE 10258132
(43) Veröffentlichungstag der Anmeldung: 09.06.2004
(73) Patentinhaber: Dürr Automotion GmbH, 70435 Stuttgart (DE)
(72) Erfinder: Kisi, Hidayet, 74074 Heilbroon (DE)
(74) Vertreter: Hoeger, Stellrecht & Partner Patentanwälte

(56) Entgegenhaltungen:
- EP-A- 1 221 420
- DE-A- 19 641 048
- DE-C- 854 906
- US-A- 5 725 669

## Beschreibung

Die vorliegende Erfindung betrifft eine Vorrichtung zur Oberflächenbehandlung von Werkstücken, insbesondere von Fahrzeugkarosserien, die mindestens ein Tauchbad und eine Fördervorrichtung mit mehreren Halterungsgestellen umfaßt, an denen jeweils ein Werkstück angeordnet ist, wobei die Fördervorrichtung die Werkstücke vollständig in das Tauchbad einbringt, im vollständig eingetauchten Zustand längs einer im wesentlichen horizontalen Translationsrichtung durch das Tauchbad hindurch fördert und aus dem Tauchbad wieder ausbringt.

Ferner betrifft die vorliegende Erfindung ein Verfahren zur Oberflächenbehandlung von Werkstücken, insbesondere von Fahrzeugkarosserien, bei dem die Werkstücke, die an jeweils einem Halterungsgestell angeordnet sind, mittels einer Fördervorrichtung vollständig in mindestens ein Tauchbad eingebracht werden, im vollständig eingetauchten Zustand längs einer im wesentlichen horizontalen Translationsrichtung durch das Tauchbad hindurch gefördert werden und aus dem Tauchbad wieder ausgebracht werden.

Solche Vorrichtungen und Verfahren zur Oberflächenbehandlung von Werkstücken sind aus dem Stand der Technik bekannt.

Insbesondere sind aus der DE 196 41 048 A1 eine Vorrichtung und ein Verfahren zur Oberflächenbehandlung von Fahrzeugkarosserien bekannt, bei denen die Fahrzeugkarosserien lösbar auf jeweils einem Halterungsgestell angeordnet werden, das mittels Förderketten längs einer Translationsrichtung gefördert wird und das um eine senkrecht zur Translationsrichtung ausgerichtete horizontale Drehachse drehbar ist. Mittels an dem Halterungsgestell vorgesehener Hebel mit Rollen, die an ortsfesten Leitschienen abrollen, wird das Halterungsgestell mit der darauf angeordneten Fahrzeugkarosserie während seiner Translationsbewegung längs der Translationsrichtung zusätzlich so gedreht, daß die daran angeordnete Fahrzeugkarosserie am Anfang des Tauchbads in das Tauchbad eintaucht und am Ende des Tauchbads aus dem Tauchbad wieder ausgebracht wird.

Vor dem Einbringen in das Tauchbad befindet sich jede Fahrzeugkarosserie in einer Standardstellung, in welcher Fensteröffnungen der Fahrzeugkarosserie oberhalb einer Bodengruppe der Fahrzeugkarosserie angeordnet sind. Beim Einbringen in das Tauchbad wird die Fahrzeugkarosserie aus dieser Standardstellung in eine Kopfüberstellung überführt, in welcher die Fahrzeugkarosserie um einen Winkel von 180° um ihre Quermittelachse gegenüber der Standardstellung gedreht ist, so daß in der Kopfüberstellung die Fensteröffnungen der Fahrzeugkarosserie unterhalb der Bodengruppe der Fahrzeugkarosserie angeordnet sind. In dieser Kopfüberstellung wird die Fahrzeugkarosserie durch das Tauchbad hindurch gefördert.

Beim Eintauchvorgang der Fahrzeugkarosserie können in Hohlräumen oder an im eingetauchten Zustand nach unten weisenden Oberflächen der Fahrzeugkarosserie Luftblasen entstehen, welche verhindern, daß die Behandlungsflüssigkeit aus dem Tauchbad an die von den Luftblasen abgedeckten Stellen der Fahrzeugkarosserie gelangen kann. Eine mangelhafte Behandlung, insbesondere eine mangelhafte Beschichtung mit einer Beschichtungsflüssigkeit aus dem Tauchbad, der betreffenden Stellen der Fahrzeugkarosserie kann hieraus resultieren.

Der vorliegenden Erfindung liegt daher die Aufgabe zugrunde, eine Vorrichtung der eingangs genannten Art zu schaffen, welche bei vollständig eingetauchten Werkstücken eine vollständige Behandlung sämtlicher Werkstückflächen ermöglicht.

Diese Aufgabe wird bei einer Vorrichtung zur Oberflächenbehandlung von Werkstücken mit den Merkmalen des Oberbegriffs von Anspruch 1 erfindungsgemäß dadurch gelöst, daß mittels der Fördervorrichtung mindestens ein Werkstück im vollständig eingetauchten Zustand um eine Drehachse gedreht wird, welche im wesentlichen parallel oder schräg zu der Translationsrichtung ausgerichtet ist.

Die erfindungsgemäße Lösung bietet den Vorteil, daß das Werkstück im vollständig eingetauchten Zustand in eine Schräglage gebracht werden kann, in welcher sich die Luftblasen, die sich beim Eintauchvorgang an dem Werkstück gebildet haben, aufgrund ihres gegenüber der Behandlungsflüssigkeit geringeren spezifischen Gewichts von dem Werkstück lösen und nach oben aus dem Tauchbad entweichen können.

Wenn es sich bei den zu behandelnden Werkstücken um Fahrzeugkarosserien handelt, so können auf diese Weise Blasen insbesondere von den Sitzaufnahmen und von der Ersatzradaufnahme der Fahrzeugkarosserien entfernt werden, so daß eine mangelhafte Behandlung, insbesondere eine mangelhafte Beschichtung, dieser Stellen der Fahrzeugkarosserien sowie insbesondere der Schweller und Leisten der Fahrzeugkarosserien vermieden wird.

Für das Ablösen der Luftblasen ist es besonders günstig, daß das Werkstück nicht nur in Schräglage durch das Tauchbad gefördert wird, sondern daß es im vollständig eingetauchten Zustand innerhalb des Tauchbades um die Drehachse gedreht wird, was eine die Blasen ablösende Strömung der Behandlungsflüssigkeit relativ zu dem Werkstück zur Folge hat.

Weist das zu behandelnde Werkstück einen Hohlraum auf, so wird dieser Hohlraum durch die mittels der Drehbewegung des Werkstücks erzeugte Strömung der Behandlungsflüssigkeit relativ zu dem Werkstück durchspült, wobei in dem Hohlraum befindliche Luftblasen aus dem Werkstück herausgespült werden und anschließend zum Badspiegel des Tauchbads aufsteigen können.

Aus der deutschen Patentschrift Nr. 854 906 ist bereits eine Vorrichtung zur Oberflächenbehandlung von Werkstücken bekannt, bei der die Werkstücke längs einer Translationsrichtung gefördert und gleichzeitig um eine parallel zu der Translationsrichtung ausgerichtete Drehachse gedreht werden. Diese bekannte Vorrichtung weist jedoch nur sehr flache Behandlungsbäder auf, in welche die zu behandelnden Fahrzeugkarosserien nicht vollständig eingetaucht werden können. Demgemäß hat bei dieser Vorrichtung die Drehbewegung der Fahrzeugkarosserien lediglich die Aufgabe, die verschiedenen zu behandelnden Flächen der Fahrzeugkarosserien nacheinander in Kontakt mit der Behandlungsflüssigkeit zu bringen. Da bei einer solchen Vorrichtung die Flächen der Fahrzeugkarosserien ständig in die Behandlungsflüssigkeit eintauchen und aus derselben wieder austauchen, stellt sich bei dieser Vorrichtung das mit der vorliegenden Erfindung gelöste Problem nicht, welches darauf beruht, daß bei einem einmaligen Eintauchvorgang entstehende Luftblasen an einem zu behandelnden Werkstück haften bleiben, welches im vollständig eingetauchten Zustand durch ein Tauchbad hindurchgefördert wird.

Das mit der Behandlungsflüssigkeit gefüllte Tauchbad kann jeder beliebigen Art der Oberflächenbehandlung der zu behandelnden Werkstücke dienen; insbesondere kann es sich um ein Tauchbad zur Vorbehandlung oder Lackierung der zu behandelnden Werkstücke handeln.

Eine besonders wirksame Entfernung der Blasen von den Oberflächen des Werkstücks ergibt sich, wenn die Drehachse im wesentlichen parallel zu der Translationsrichtung ausgerichtet ist.

Die Drehbewegung des Werkstücks um die Drehachse kann grundsätzlich um beliebige Drehwinkel und in beliebiger Drehrichtung erfolgen. Während der Drehbewegung kann die Drehrichtung beibehalten werden oder beliebig oft geändert werden. Die Drehbewegung kann insbesondere eine Schwenkbewegung umfassen. Insbesondere kann die Drehbewegung so gestaltet sein, daß sich das Werkstück zwischen zwei extremen Drehwinkelstellungen hin und her bewegt.

Die Drehbewegung kann auch beliebig oft unterbrochen werden.

Um eine ausreichende Schräglage des Werkstücks in dem Tauchbad erzielen zu können, ist es von Vorteil, wenn das Werkstück im vollständig eingetauchten Zustand um mindestens 10°, vorzugsweise um mindestens 30°, aus seiner Ausgangsstellung, in welcher es sich unmittelbar nach dem Eintauchen in das Tauchbad befindet, um die Drehachse drehbar ist.

Besonders günstig ist es, wenn das Werkstück im vollständig eingetauchten Zustand um mindestens 360° aus seiner Ausgangsstellung um die Drehachse drehbar ist.

Ferner kann vorgesehen sein, daß das Werkstück im vollständig eingetauchten Zustand frei, d.h. um beliebige Winkel und in beliebiger Drehrichtung, um die Drehachse drehbar ist.

Um Luftblasen in effizienter Weise von beliebig orientierten Oberflächen des Werkstücks entfernen zu können, ist vorteilhafterweise vorgesehen, daß das Werkstück im vollständig eingetauchten Zustand in Drehstellungen bringbar ist, in denen das Werkstück gegenüber seiner Ausgangsstellung (längs der Translationsrichtung gesehen) im Uhrzeigersinn um die Drehachse verdreht ist, und in Drehstellungen bringbar ist, in denen das Werkstück gegenüber seiner Ausgangsstellung (längs der Translationsrichtung gesehen) im Gegenuhrzeigersinn um die Drehachse verdreht ist.

Wenn es sich bei dem zu behandelnden Werkstück um eine Fahrzeugkarosserie handelt, so ist es von Vorteil, wenn die Drehachse im wesentlichen parallel zur Längsachse der Fahrzeugkarosserie ausgerichtet ist. Da die Ausdehnung der Fahrzeugkarosserie senkrecht zu ihrer Längsachse deutlich geringer ist als die Ausdehnung der Fahrzeugkarosserie längs der Längsachse, wird hierdurch erreicht, daß die Luftblasen, nachdem die Fahrzeugkarosserie in die Schräglage gebracht worden ist, einen möglichst kurzen Weg längs der Fahrzeugkarosserie zurücklegen müssen, um deren Rand zu erreichen und sich ganz von der Fahrzeugkarosserie lösen zu können.

Grundsätzlich ist es möglich, das Werkstück um die Drehachse zu drehen, während die Translationsbewegung des Werkstücks durch das Tauchbad unterbrochen ist.

Die Luftblasen werden jedoch besonders wirksam von dem Werkstück abgelöst, wenn vorteilhafterweise vorgesehen ist, daß das Werkstück um die Drehachse drehbar ist, während es längs der Translationsrichtung durch das Tauchbad gefördert wird. Auf diese Weise addieren sich die Geschwindigkeiten der Relativströmung der Behandlungsflüssigkeit relativ zu dem Werkstück aufgrund der Drehung um die Drehachse und aufgrund der Translationsbewegung durch das Tauchbad.

Ferner kann vorgesehen sein, daß die Drehachse des Werkstücks während der Drehbewegung in vertikaler Richtung bewegt, d.h. angehoben oder abgesenkt wird, wodurch die Ablösung der Luftblasen vom Werkstück begünstigt wird.

Da sich im Bereich des Badspiegels Verunreinigungen in dem Tauchbad ansammeln können, ist es günstig, wenn das Werkstück während der Drehung um die Drehachse von dem Badspiegel des Tauchbads stets einen Mindestabstand von mindestens 5 cm, vorzugsweise von mindestens 10 cm, einhält. Auf diese Weise wird vermieden, daß Verunreinigungen, die sich an der Oberseite des Tauchbads angesammelt haben, in Kontakt mit dem zu behandelnden Werkstück gelangen.

Bei einer bevorzugten Ausgestaltung der erfindungsgemäßen Vorrichtung ist vorgesehen, daß die Fördervorrichtung eine Bewegungsvorrichtung umfaßt, mittels welcher das Werkstück aus einer Stellung außerhalb des Tauchbads in eine Stellung, in der das Werkstück vollständig in das Tauchbad eingetaucht ist, überführbar ist.

Eine solche Bewegungsvorrichtung kann insbesondere eine Eindrehvorrichtung umfassen, mittels welcher das Werkstück um eine Eindrehachse drehbar ist.

Die Bewegung, mittels welcher das Werkstück aus seiner Stellung außerhalb des Tauchbads in eine Stellung, in der das Werkstück vollständig in das Tauchbad eingetaucht ist, überführt wird, kann aber neben der Drehbewegung auch weitere Bewegungen umfassen, welche gleichzeitig mit, vor oder nach der Drehbewegung stattfinden können.

Besonders günstig ist es, wenn das Werkstück um einen Winkel von mindestens 180° um die Eindrehachse drehbar ist.

Ferner hat es sich als günstig erwiesen, wenn die Eindrehachse quer, vorzugsweise im wesentlichen senkrecht, zu der Drehachse ausgerichtet ist.

Wenn es sich bei dem zu behandelnden Werkstück um eine Fahrzeugkarosserie handelt, so ist es besonders günstig, wenn das Werkstück mittels der Bewegungseinrichtung aus einer Standardstellung, in welcher Fensteröffnungen der Fahrzeugkarosserie oberhalb einer Bodengruppe der Fahrzeugkarosserie angeordnet sind, in eine Kopfüberstellung, in welcher die Fensteröffnungen der Fahrzeugkarosserie unterhalb der Bodengruppe der Fahrzeugkarosserie angeordnet sind, überführbar ist.

Auf diese Weise wird erreicht, daß die Fahrzeugkarosserie in der Kopfüberstellung durch das Tauchbad hindurchgefördert wird. Dies bietet den Vorteil, daß die horizontalen Sichtflächen der Fahrzeugkarosserie, wie beispielsweise die Dachfläche, die Motorhaube und der Kofferraumdeckel, während des Verweilens im Tauchbad nach unten weisen, so daß sich keine Schmutzpartikel an diesen Flächen absetzen können.

Bei einer besonderen Ausgestaltung der erfindungsgemäßen Vorrichtung ist vorgesehen, daß mindestens ein Halterungsgestell einen Basisteil umfaßt, der an einer Führungseinrichtung der Fördervorrichtung geführt ist.

Insbesondere kann vorgesehen sein, daß der Basisteil mittels eines mit dem Basisteil mitbewegten Translationsantriebs längs der Führungseinrichtung verfahrbar ist.

Ferner kann vorgesehen sein, daß mindestens ein Halterungsgestell einen Drehteil umfaßt, welcher um eine Eindrehachse drehbar an dem Basisteil gehalten ist.

Bei einer alternativen Ausgestaltung der Erfindung kann vorgesehen sein, daß mindestens ein Halterungsgestell einen Drehteil umfaßt, welcher um eine Eindrehachse drehbar mit einem kontinuierlichen Fördermittel verbunden ist, wobei das Fördermittel den Drehteil längs der Translationsrichtung fördert.

Ferner kann vorgesehen sein, daß mindestens ein Halterungsgestell einen Halteteil umfaßt, an welchem das Werkstück gehalten ist, wobei der Halteteil relativ zu dem Drehteil um die Drehachse drehbar ist.

Der Antrieb der Drehbewegung des Werkstücks gestaltet sich besonders einfach, wenn vorgesehen ist, daß mindestens ein Halterungsgestell einen an dem Halterungsgestell angeordneten Drehantriebsmotor zum Antreiben der Drehbewegung des Werkstücks um die Drehachse umfaßt.

Ein solcher Drehantriebsmotor kann so an dem Halterungsgestell angeordnet sein, daß er nicht in das Tauchbad eintaucht.

Der Drehantriebsmotor kann aber auch als ein mit dem Werkstück in das Tauchbad eintauchender Tauchmotor ausgebildet sein.

Ein solcher Tauchmotor kann insbesondere so angeordnet sein, daß er eine Drehwelle, um deren Achse das Werkstück gedreht wird, direkt, d.h. ohne Zwischenschaltung eines Getriebes, antreibt.

Ferner kann der Drehantriebsmotor als ein Trommelmotor ausgebildet sein.

Alternativ oder ergänzend hierzu kann auch vorgesehen sein, daß mindestens ein Halterungsgestell eine Drehantriebsvorrichtung zum Antreiben der Drehbewegung des Werkstücks um die Drehachse umfaßt und daß die Fördervorrichtung einen externen Drehantriebsmotor umfaßt, der vor Beginn der Drehung des Werkstücks um die Drehachse mit der Drehantriebseinrichtung des jeweiligen Halterungsgestells gekoppelt und nach Ende der Drehung des Werkstücks um die Drehachse von der Drehantriebsvorrichtung entkoppelt wird. Auf diese Weise ist es möglich, mit einem einzigen externen Drehantriebsmotor für den Antrieb sämtlicher Halterungsgestelle der Vorrichtung zur Oberflächenbehandlung auszukommen.

Bei dieser Ausgestaltung der Erfindung ist es ferner von Vorteil, wenn der externe Drehantriebsmotor während der Drehung des Werkstücks um die Drehachse längs der Translationsrichtung des Halterungsgestells bewegt wird.

Ferner ist es bei dieser Ausgestaltung der Erfindung von Vorteil, wenn die Fördervorrichtung eine Kopplungseinrichtung zum Koppeln des externen Drehantriebsmotors mit der Drehantriebsvorrichtung umfaßt, welche eine Betätigungseinrichtung zum Betätigen eines Kopplungsriegels umfaßt.

Wenn das Halterungsgestell mit einer Drehvorrichtung versehen ist, welche es ermöglicht, die Drehbewegung unabhängig von der Translationsbewegung des Werkstücks durchzuführen, so bietet dies den Vorteil, daß die Drehbewegung in einfacher Weise variiert und beispielsweise in Abhängigkeit von dem Typ des jeweiligen Werkstücks für jedes Halterungsgestell unabhängig von den übrigen Halterungsgestellen gesteuert werden kann.

Alternativ hierzu kann aber auch vorgesehen sein, daß die Drehbewegung des Werkstücks dadurch erzeugt wird, daß das Halterungsgestell an einer Führungseinrichtung geführt ist, welche mindestens eine zumindest abschnittsweise wendelförmig ausgebildete Führungsschiene umfaßt, so daß das Halterungsgestell als Ganzes zusammen mit dem daran angeordneten Werkstück eine Drehung um die Wendelachse der Führungsschiene ausführt, während sich das Halterungsgestell längs der Führungseinrichtung bewegt.

Wenn die Wendelachse der Führungsschiene nicht überall horizontal ausgerichtet ist, sondern zumindest abschnittsweise gegen die Horizontale geneigt ist, so kann hierdurch eine zusätzliche vertikale Bewegung des Werkstücks im Tauchbad erzeugt werden, welche die Ablösung der Luftblasen vom Werkstück fördert.

Der vorliegenden Erfindung liegt die weitere Aufgabe zugrunde, ein Verfahren zur Oberflächenbehandlung von Werkstücken der eingangs genannten Art zu schaffen, welches bei vollständig eingetauchten Werkstücken eine vollständige Behandlung sämtlicher Werkstückflächen ermöglicht.

Diese Aufgabe wird bei einem Verfahren zur Oberflächenbehandlung von Werkstücken mit den Merkmalen des Oberbegriffs von Anspruch 23 erfindungsgemäß dadurch gelöst, daß mindestens ein Werkstück im vollständig eingetauchten Zustand um eine Drehachse gedreht wird, welche im wesentlichen parallel oder schräg zu der Translationsrichtung ausgerichtet ist.

Besondere Ausgestaltungen des erfindungsgemäßen Verfahrens sind Gegenstand der abhängigen Ansprüche 24 bis 44, deren Vorteile bereits vorstehend im Zusammenhang mit den besonderen Ausgestaltungen der erfindungsgemäßen Vorrichtung erläutert worden sind.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Seitenansicht einer Fahrzeugkarosserie, die an einem Halterungsgestell einer ersten Ausführungsform einer Vorrichtung zur Oberflächenbehandlung angeordnet ist und sich oberhalb des Badspiegels eines Tauchbads befindet;
- Fig. 2: eine schematische Draufsicht von oben auf das Halterungsgestell aus Fig. 1;
- Fig. 3: einen schematischen Querschnitt durch die erste Ausführungsform einer Vorrichtung zur Oberflächenbehandlung, mit einer oberhalb des Tauchbads angeordneten Fahrzeugkarosserie;
- Fig. 4: eine vergrößerte Darstellung des Bereichs I aus Fig. 3;
- Fig. 5: eine schematische Draufsicht auf zwei Elemente einer Kopplungseinrichtung, im entkoppelten Zustand;
- Fig. 6: eine schematische Seitenansicht eines Drehteils und eines Halteteils eines Halterungsgestells mit einer daran angeordneten Fahrzeugkarosserie, wobei die Fahrzeugkarosserie vollständig in das Tauchbad eingetaucht ist;
- Fig. 7: einen schematischen Querschnitt durch die erste Ausführungsform einer Vorrichtung zur Oberflächenbehandlung, mit einer in das Tauchbad vollständig eingetauchten Fahrzeugkarosserie;
- Fig. 8: eine vergrößerte Darstellung einer Kopplungseinrichtung im gekoppelten Zustand;
- Fig. 9: eine schematische Draufsicht auf zwei Elemente der Kopplungseinrichtung, im gekoppelten Zustand;
- Fig. 10: einen schematischen Querschnitt durch die erste Ausführungsform einer Vorrichtung zur Oberflächenbehandlung mit einer Fahrzeugkarosserie, die vollständig in das Tauchbad eingetaucht ist und in dem Tauchbad in mehreren verschiedenen Drehstellungen dargestellt ist;
- Fig. 11: einen schematischen Querschnitt durch eine zweite Ausführungsform einer Vorrichtung zur Oberflächenbehandlung, deren Halterungsgestell nur auf einer Seite des Tauchbads geführt sind, mit einer Fahrzeugkarosserie, die sich oberhalb des Tauchbades befindet;
- Fig. 12: eine schematische Draufsicht auf ein Halterungsgestell der zweiten Ausführungsform einer Vorrichtung zur Oberflächenbehandlung;
- Fig. 13: einen schematischen Querschnitt durch die zweite Ausführungsform einer Vorrichtung zur Oberflächenbehandlung, mit einer vollständig in das Tauchbad eingetauchten Fahrzeugkarosserie;
- Fig. 14: einen schematischen Querschnitt durch die zweite Ausführungsform einer Vorrichtung zur Oberflächenbehandlung, mit einer Fahrzeugkarosserie, die in verschiedenen Drehstellungen innerhalb des Tauchbades dargestellt ist;
- Fig. 15: eine schematische Seitenansicht einer Fahrzeugkarosserie, die an einem Halterungsgestell einer dritten Ausführungsform einer Vorrichtung zur Oberflächenbehandlung angeordnet ist, wobei sich die Fahrzeugkarosserie oberhalb eines Tauchbades der Vorrichtung befindet;
- Fig. 16: einen schematischen Querschnitt durch die dritte Ausführungsform einer Vorrichtung zur Oberflächenbehandlung, mit einer Fahrzeugkarosserie, die sich oberhalb des Tauchbades befindet;
- Fig. 17: eine vergrößerte Darstellung des Bereichs II aus Fig. 16;
- Fig. 18: einen der Fig. 17 entsprechenden Ausschnitt aus einem schematischen Querschnitt durch die dritte Ausführungsform einer Vorrichtung zur Oberflächenbehandlung, mit einer vollständig in das Tauchbad eingetauchten Fahrzeugkarosserie;
- Fig. 19: eine schematische Seitenansicht einer Kopplungseinrichtung im entkoppelten Zustand;
- Fig. 20: eine schematische Seitenansicht einer Kopplungseinrichtung im gekoppelten Zustand;
- Fig. 21: einen der Fig. 18 entsprechenden Ausschnitt aus einem schematischen Querschnitt durch die dritte Ausführungsform einer Vorrichtung zur Oberflächenbehandlung, mit einer Fahrzeugkarosserie, die innerhalb des Tauchbades in mehreren Drehstellungen dargestellt ist;
- Fig. 22: eine schematische Draufsicht auf das Halterungsgestell der dritten Ausführungsform einer Vorrichtung zur Oberflächenbehandlung;
- Fig. 23: eine schematische Seitenansicht einer Fahrzeugkarosserie, die an einem Halterungsgestell einer vierten Ausführungsform einer Vorrichtung zur Oberflächenbehandlung angeordnet ist, wobei die Fahrzeugkarosserie sich oberhalb eines Tauchbades befindet;
- Fig. 24: einen schematischen Querschnitt durch die vierte Ausführungsform einer Vorrichtung zur Oberflächenbehandlung, mit einer oberhalb des Tauchbades angeordneten Fahrzeugkarosserie;
- Fig. 25: eine schematische Seitenansicht des Halterungsgestells der vierten Ausführungsform einer Vorrichtung zur Oberflächenbehandlung, wobei die Fahrzeugkarosserie vollständig in das Tauchbad eingetaucht ist;
- Fig. 26: einen Ausschnitt aus einem schematischen Querschnitt durch die vierte Ausführungsform einer Vorrichtung zur Oberflächenbehandlung, mit einer vollständig in das Tauchbad eingetauchten Fahrzeugkarosserie;
- Fig. 27: eine schematische Seitenansicht einer Fahrzeugkarosserie, die an einem Halterungsgestell einer fünften Ausführungsform einer Vorrichtung zur Oberflächenbehandlung angeordnet ist, wobei die Fahrzeugkarosserie sich oberhalb eines Tauchbades befindet;
- Fig. 28: einen Ausschnitt aus einem schematischen Querschnitt durch die fünfte Ausführungsform einer Vorrichtung zur Oberflächenbehandlung, mit einer oberhalb des Tauchbades angeordneten Fahrzeugkarosserie;
- Fig. 29: eine schematische Seitenansicht des Halterungsgestells der fünften Ausführungsform einer Vorrichtung zur Oberflächenbehandlung, wobei die Fahrzeugkarosserie vollständig in das Tauchbad eingetaucht ist;
- Fig. 30: einen Ausschnitt aus einem schematischen Querschnitt durch die fünfte Ausführungsform einer Vorrichtung zur Oberflächenbehandlung, mit einer vollständig in das Tauchbad eingetauchten Fahrzeugkarosserie;
- Fig. 31: eine schematische Seitenansicht einer Fahrzeugkarosserie, die an einem Halterungsgestell einer sechsten Ausführungsform einer Vorrichtung zur Oberflächenbehandlung angeordnet ist, wobei die Fahrzeugkarosserie sich oberhalb eines Tauchbades befindet;
- Fig. 32: einen schematischen Querschnitt durch die sechste Ausführungsform einer Vorrichtung zur Oberflächenbehandlung, mit einer oberhalb des Tauchbades angeordneten Fahrzeugkarosserie;
- Fig. 33: eine schematische Seitenansicht eines Halterungsgestells der sechsten Ausführungsform einer Vorrichtung zur Oberflächenbehandlung, wobei die Fahrzeugkarosserie vollständig in das Tauchbad eingetaucht ist; und
- Fig. 34: einen Ausschnitt aus einem schematischen Querschnitt durch die sechste Ausführungsform einer Vorrichtung zur Oberflächenbehandlung, mit einer vollständig in das Tauchbad eingetauchten Fahrzeugkarosserie.

Gleiche oder funktional äquivalente Elemente sind in allen Figuren mit denselben Bezugszeichen bezeichnet.

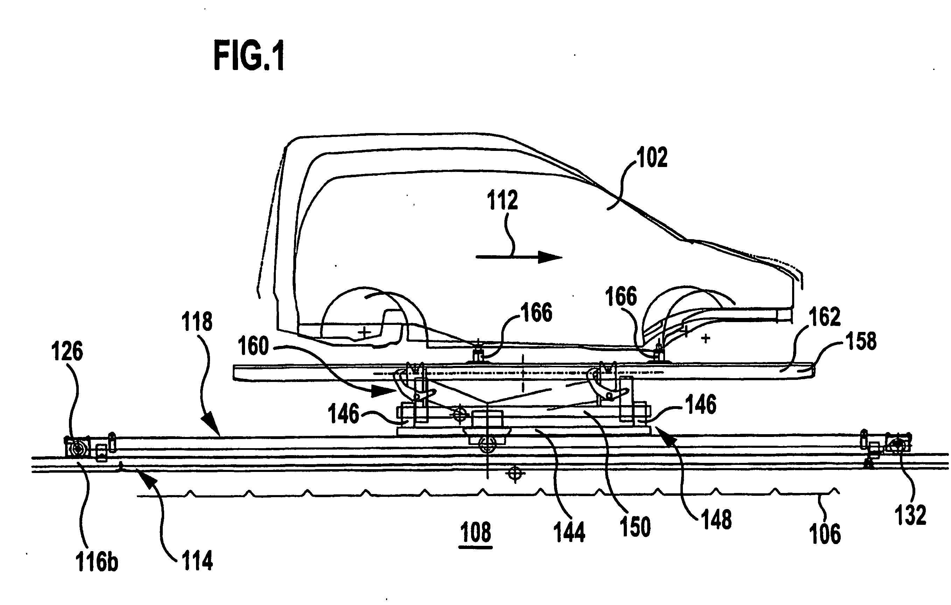

Eine in den Fig. 1 bis 10 dargestellte erste Ausführungsform einer als Ganzes mit 100 bezeichneten Vorrichtung zur Oberflächenbehandlung von Fahrzeugkarosserien 102 umfaßt mindestens ein Tauchbecken 104, das bis zu einem Badspiegel 106 mit einem Tauchbad 108 einer Flüssigkeit zur Oberflächenbehandlung der Fahrzeugkarosserien 102 gefüllt ist.

Ferner umfaßt die Vorrichtung zur Oberflächenbehandlung 100 eine Fördervorrichtung 110, mittels welcher die Fahrzeugkarosserien 102 in das Tauchbad 108 vollständig einbringbar, im vollständig eingetauchten Zustand längs einer horizontalen Translationsrichtung 112 durch das Tauchbad 108 hindurch bewegbar und anschließend aus dem Tauchbad 108 wieder ausbringbar sind.

Die Fördervorrichtung 110 umfaßt eine Führungseinrichtung 114, welche zwei Führungsschienen 116a, 116b aufweist, von denen sich jeweils eine auf der linken Seite bzw. auf der rechten Seite des Tauchbades 108 parallel zur Translationsrichtung 112 erstreckt.

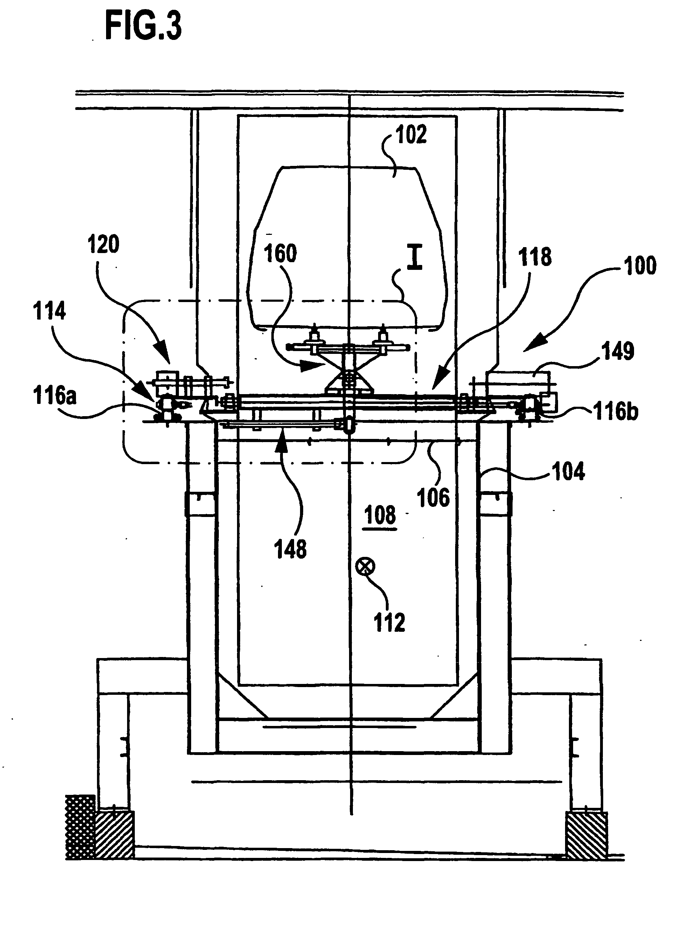

Wie am besten aus Fig. 3 zu ersehen ist, sind beide Führungsschienen 116a, 116b oberhalb des Badspiegels 106 des Tauchbads 108 angeordnet.

Ferner umfaßt die Fördervorrichtung 110 mehrere Halterungsgestelle 118 (von denen in den Fig. 1 bis 10 nur eines dargestellt ist), welche längs der Führungseinrichtung 114 der Fördervorrichtung 110 selbständig und unabhängig voneinander verfahrbar sind und längs der Führungseinrichtung 114 im Abstand voneinander aufeinander folgen.

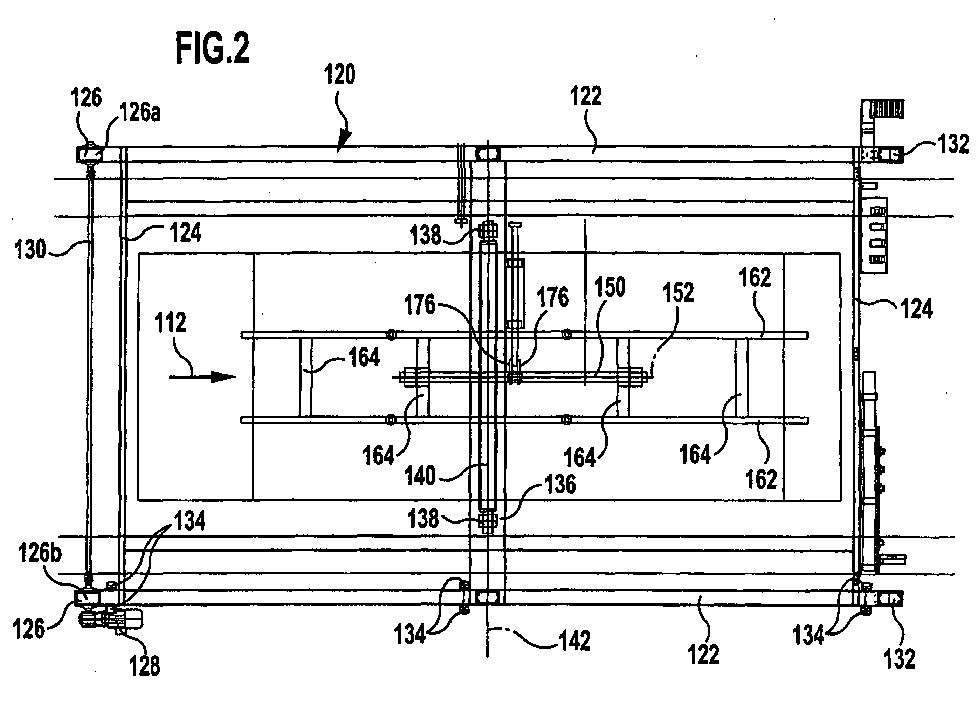

Jedes der Halterungsgestelle 118 umfaßt, wie am besten aus Fig. 2 zu ersehen ist, einen an der Führungseinrichtung 114 geführten Basisteil 120, welcher im wesentlichen die Form eines rechteckigen Rahmens mit parallel zu den Führungsschienen 116a, 116b verlaufenden Längsträgern 122, die mittels senkrecht zu den Längsträgern 122 verlaufenden Querträgern 124 miteinander verbunden sind, aufweist.

An ihrem (in der Translationsrichtung 112 gesehen) hinteren Ende sind die Längsträger 122 des Basisteils 120 mit jeweils einer angetriebenen Laufrolle 126 versehen, welche an dem betreffenden Längsträger 122 um eine horizontale Achse drehbar gelagert ist und an einer horizontalen Oberseite der jeweils zugeordneten Führungsschiene 116a, 116b abrollt.

Eine der beiden angetriebenen Laufrollen (126b) ist mittels eines am Basisteil 120 angeordneten Translationsantriebsmotors 128 direkt zu einer Drehbewegung antreibbar, welche mittels einer Gelenkwelle 130 auf die gegenüberliegende, indirekt angetriebene Laufrolle 126a übertragen wird.

Durch die Reibung zwischen den angetriebenen Laufrollen 126 einerseits und der Führungsschienen 116a, 116b andererseits ist der Basisteil 120 des Halterungsgestells 118 längs der Translationsrichtung 112 verfahrbar.

An den (in der Translationsrichtung 112 gesehen) vorderen Enden der Längsträger 122 stützt sich der Basisteil 120 mittels jeweils einer nicht angetriebenen Laufrolle 132 an der Oberseite der Führungsschienen 116a bzw. 116b ab.

Eine seitliche Führung des Basisteils 120 an der Führungseinrichtung 114 ist durch mehrere Paare von Führungsrollen 134 gewährleistet, die um vertikale Achsen drehbar an einem der Längsträger 122 angeordnet sind und an einander gegenüberliegenden vertikalen Führungsflächen einer der Führungsschienen 116a, 116b abrollen.

Die Längsträger 122 des Basisteils 120 sind, etwa in der Mitte zwischen den Querträgern 124, durch eine Traverse 136 miteinander verbunden, welche zwei quer zur Translationsrichtung 112 voneinander beabstandete Lagerböcke 138 trägt, an denen die Enden einer Eindrehwelle 140 um eine horizontal und senkrecht zur Translationsrichtung 112 verlaufende Eindrehachse 142 drehbar gelagert sind.

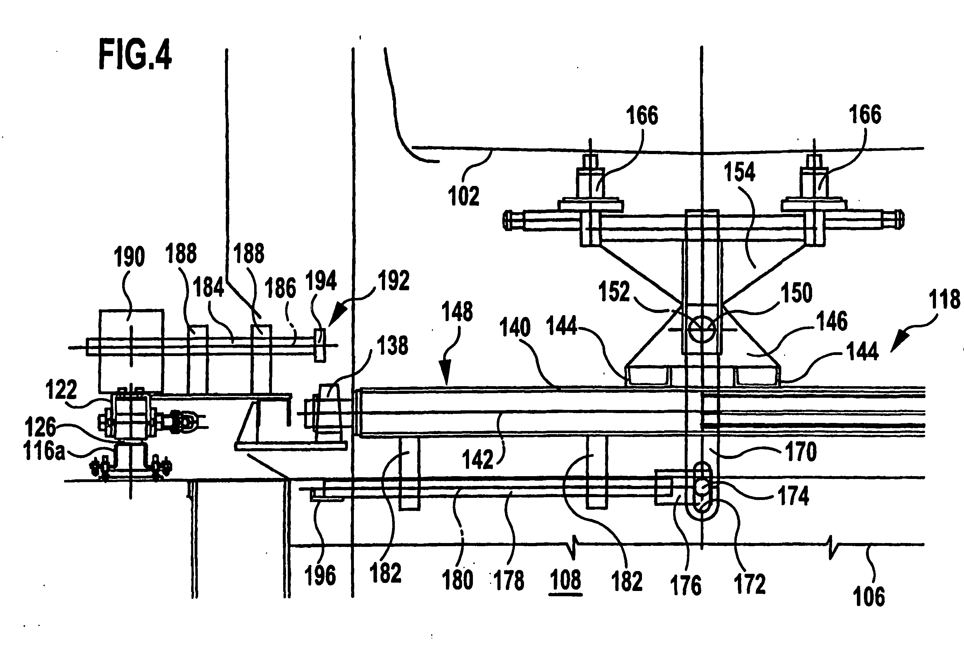

Wie am besten aus Fig. 4 zu ersehen ist, ist an der Eindrehwelle 140 eine Drehplattform 143 festgelegt, die zwei Längsträger 144 umfaßt, welche sich im Abstand voneinander senkrecht zu der Eindrehachse 142 erstrecken.

An ihren vorderen und hinteren Enden sind die Längsträger 144 über jeweils einen Lagerbock 146 miteinander verbunden.

Die Eindrehwelle 140 bildet zusammen mit der Drehplattform 143, den Längsträgern 144 und den Lagerböcken 146 einen als Ganzes mit 148 bezeichneten Drehteil des Halterungsgestells 118, welcher mit dem Basisteil 120 längs der Translationsrichtung 112 mitbewegt wird und relativ zu dem Basisteil 120 um die Eindrehachse 142 mittels eines Eindrehantriebsmotors 149, der an dem Basisteil 120 vorgesehen ist, mit demselben mitbewegt wird und über ein Getriebe mit der Eindrehwelle 140 gekoppelt ist, um beliebige Winkel in beliebiger Drehrichtung drehbar ist.

An den Lagerböcken 146 des Drehteils 148 ist eine Drehwelle 150 um eine zu der Eindrehachse 142 senkrechte Drehachse 152 drehbar gelagert.

An der Drehwelle 150 sind Träger 154 festgelegt, welche Einspannvorrichtungen 156 tragen, mittels welcher ein die Fahrzeugkarosserie 102 tragender Skidrahmen 158 lösbar an dem Halterungsgestell 118 festlegbar ist.

Die Drehwelle 150, die Träger 154 und die Einspannvorrichtungen 156 bilden zusammen einen als Ganzes mit 160 bezeichneten Halteteil des Halterungsgestells 118, welcher mit dem Drehteil 148 und somit mit dem Basisteil 120 längs der Translationsrichtung 112 mitbewegt wird und relativ zu dem Drehteil 148 um die Drehachse 152 verdrehbar ist.

Der Skidrahmen 158 umfaßt zwei sich parallel zur Längsachse der Fahrzeugkarosserie 102 erstreckende Skidkufen 162, welche über Querstreben 164 miteinander verbunden sind.

An mehreren dieser Querstreben 164 greifen die Einspannvorrichtungen 156 des Halteteils 160 an, um den Skidrahmen 158 an dem Halteteil 160 zu halten.

Ferner sind mehrere der Querstreben 164 des Skidrahmens 158 mit Arretiervorrichtungen 166 versehen, mittels welcher die Fahrzeugkarosserie 102 lösbar an dem Skidrahmen 158 festlegbar ist.

Für die Fahrzeugkarosserie 102 selbst sind in Fig. 1 mehrere, alternativ zueinander mögliche Außenkonturen eingezeichnet.

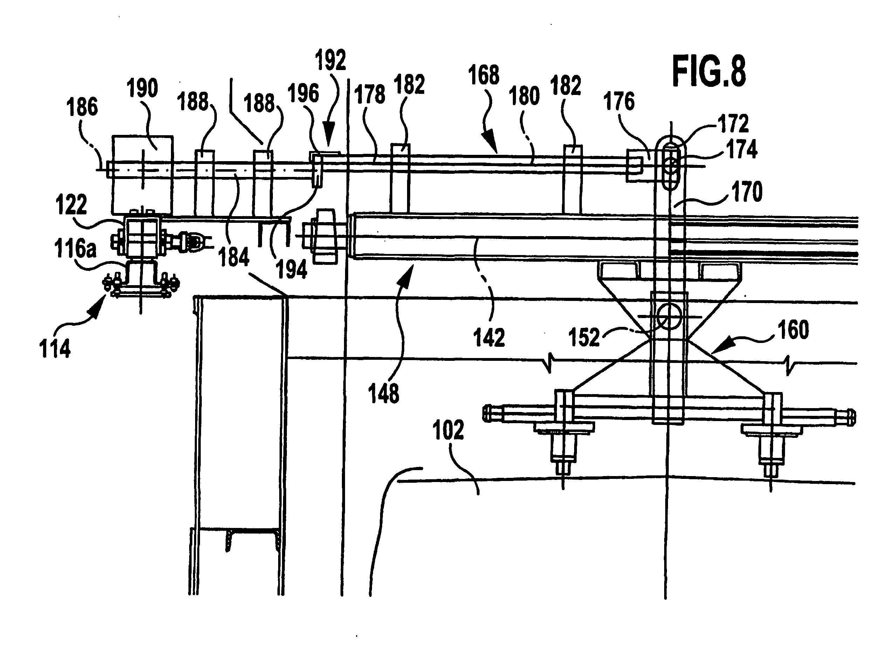

Um den Halteteil 160 um die Drehachse 152 in Drehung versetzen zu können, ist eine als Ganzes mit 168 versehene Drehantriebsvorrichtung vorgesehen, welche einen zwischen den Lagerböcken 146 für die Drehwelle 150 starr an der Drehwelle 150 festgelegten Drehhebel 170 umfaßt, der an seinem der Drehwelle 150 abgewandten freien Ende mit einem sich radial in Bezug auf die Drehachse 152 erstreckenden Langloch 172 versehen ist (siehe Fig. 4 und 8).

Ein sich senkrecht zur Längsrichtung des Drehhebels 170 erstreckender Verbindungszapfen 174 ist in dem Langloch 172 längsverschieblich geführt und über zwei Verbindungsplatten 176, welche zu beiden Seiten des Drehhebels 170 angeordnet sind, mit einem verbindungszapfenseitigen Ende eines ersten Schubstangenteils 178 verbunden, welches längs seiner Längsachse 180 verschieblich in zwei Lagerböcken 182 gelagert ist, die ihrerseits an dem Drehteil 148 des Halterungsgestells 118 festgelegt sind.

Die Drehantriebsvorrichtung 168 umfaßt ferner ein zweites Schubstangenteil 184, welches längs seiner Längsachse 186 verschieblich in zwei Lagerböcken 188 gelagert ist, die an dem Basisteil 120 festgelegt sind.

Das zweite Schubstangenteil 184 ist mittels eines Drehantriebsmotors 190, der ebenfalls an dem Basisteil 120 angeordnet ist, zu einer Hin- und Herbewegung längs seiner Längsachse 186 antreibbar.

Insbesondere kann vorgesehen sein, daß der Drehantriebsmotor 190 die Hin- und Herbewegung des zweiten Schubstangenteils 184 dadurch bewirkt, daß er ein (nicht dargestelltes) Zahnrad zu einer Drehbewegung antreibt, welches mit einem zahnstangenförmig ausgebildeten Abschnitt des ersten Schubstangenteils 178 in Eingriff steht, so daß die Drehbewegung des Zahnrades in eine lineare Bewegung des zweiten Schubstangenteils 184 gewandelt wird.

Um die Hin- und Herbewegung des zweiten Schubstangenteils 184 auf das erste Schubstangenteil 178 übertragen zu können, ist eine als Ganzes mit 192 bezeichnete Kopplungseinrichtung vorgesehen, welche einen an dem drehtellseitigen Stirnende des zweiten Schubstangenteils 184 vorgesehenen Kopplungsflansch 194 und einen an dem basisteilseitigen Stirnende des ersten Schubstangenteils 178 vorgesehenen Kopplungswinkel 196 umfaßt.

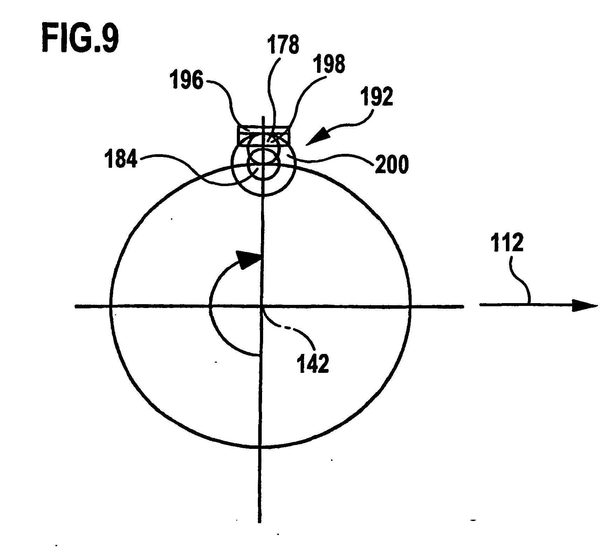

In der in den Fig. 8 und 9 dargestellten Kopplungsstellung des Kopplungsflansches 194 und des Kopplungswinkels 196 hintergreift der Kopplungswinkel 196 den Kopplungsflansch 194 und liegt die drehteilseitige Stirnfläche 200 des Kopplungsflansches 194 flächig an der basisteilseitigen Stirnfläche 198 des ersten Schubstangenteils 178 an, so daß die beiden Schubstangenteile 178, 184 durch Formschluß gegen ein Auseinanderbewegen in der Längsrichtung der beiden Schubstangenteile 178, 184 gesichert sind und somit das erste Schubstangenteil 178, dessen Längsachse 180 parallel zu der Längsachse 186 des zweiten Schubstangenteils 184 ausgerichtet ist, in der Kopplungsstellung der Hin- und Herbewegung des zweiten Schubstangenteils 184 längs der Längsachse 186 folgt.

Für die Ansteuerung des Drehantriebsmotors 190, des Eindrehantriebsmotors 149 für die Drehung des Drehteils 148 relativ zu dem Basisteil 120 und des Translationsantriebsmotors 128 für die Translationsbewegung des Basisteils 120 längs der Führungseinrichtung 114 ist eine an dem Halterungsgestell 118 vorgesehene und mit demselben mitbewegte (nicht dargestellte) Steuerungseinrichtung vorgesehen.

Die vorstehend beschriebene Vorrichtung zur Oberflächenbehandlung 100 von Fahrzeugkarosserien 102 funktioniert wie folgt:

Jeweils eine auf einem Skidrahmen 158 angeordnete Fahrzeugkarosserie 102 wird in einer (nicht dargestellten) Beladungsstation der Fördervorrichtung 110 mittels der Einspannvorrichtungen 156 an dem Halteteil 160 jeweils eines Halterungsgestells 118 lösbar festgelegt.

Die Fahrzeugkarosserie 102 befindet sich zunächst in der in Fig. 1 dargestellten Standardstellung, in welcher Fensteröffnungen der Fahrzeugkarosserie oberhalb einer Bodengruppe der Fahrzeugkarosserie angeordnet sind.

Anschließend wird das Halterungsgestell 118 mittels des Translationsantriebsmotors 128 längs der Führungseinrichtung 114 von der Beladestation bis an den Anfang des Tauchbades 108 bewegt.

Im Anfangsbereich des Tauchbads 108 wird die Fahrzeugkarosserie 102 in das Tauchbad 108 eingebracht, indem der Drehteil 148 um einen Winkel von 180° um die Eindrehachse 142 relativ zu dem Basisteil 120 gedreht wird.

Diese Drehung kann im Uhrzeigersinn oder im Gegenuhrzeigersinn erfolgen; ferner kann die Translationsbewegung des Basisteils 120 längs der Translationsrichtung 112 während der Drehung des Drehteils 148 fortgesetzt werden oder unterbrochen sein.

Es ist auch möglich, daß sich das Basisteil 120 zumindest während eines Abschnitts der Drehbewegung des Drehteils 148 entgegen der Translationsrichtung 112 zurückbewegt.

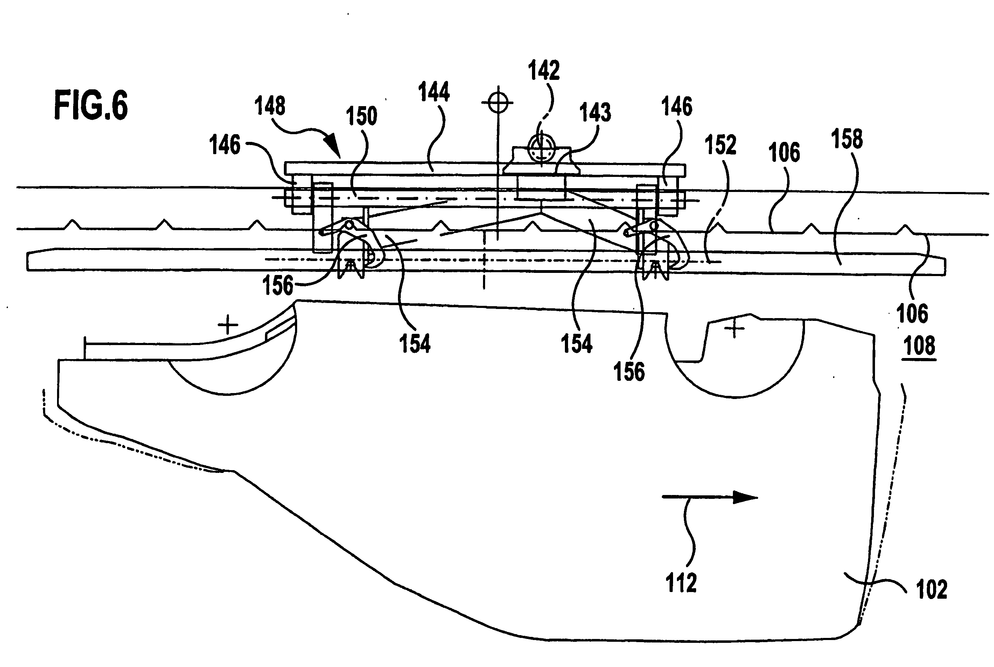

Nach Abschluß der Drehbewegung des Drehteils 148 relativ zu dem Basisteil 120 ist die Fahrzeugkarosserie 102 von der ursprünglichen Standardstellung in die in Fig. 6 dargestellte Kopfüberstellung überführt worden, in welcher die Fensteröffnungen der Fahrzeugkarosserie 102 unterhalb der Bodengruppe der Fahrzeugkarosserie angeordnet sind.

In dieser, nach Abschluß der Drehbewegung des Drehteils 148 erreichten, Eintauchstellung ist die Fahrzeugkarosserie 102 vollständig in das Tauchbad 108 eingetaucht.

Wie aus Fig. 6 zu ersehen ist, ist bei dieser Ausführungsform einer Vorrichtung zur Oberflächenbehandlung vorgesehen, daß in der Eintauchstellung auch der Skidrahmen 158 vollständig in das Tauchbad 108 eingetaucht ist.

Es wäre aber auch denkbar, die Vorrichtung 100 so auszugestalten, daß in der Eintauchstellung lediglich die Fahrzeugkarosserie 102 selbst vollständig in das Tauchbad 108 eingetaucht ist, während sich der Skidrahmen 158 zumindest teilweise oberhalb des Badspiegels 106 befindet.

Die Eindrehwelle 140 und die Drehwelle 150 des Halterungsgestells 118 befinden sich in der Eintauchstellung der Fahrzeugkarosserie 102 oberhalb des Badspiegels 106, um zu verhindern, daß sich Material aus dem Tauchbad 108 an diesen beweglichen Elementen des Halterungsgestells 118 ablagert.

In dem vollständig eingetauchten Zustand wird die Fahrzeugkarosserie 102 längs der Translationsrichtung 112 durch das Tauchbad 108 bewegt, indem die von dem Translationsantriebsmotor 128 angetriebene Translationsbewegung des Basisteils 120 fortgesetzt oder, wenn dieselbe für die Drehbewegung des Drehteils 148 unterbrochen worden war, wieder aufgenommen wird.

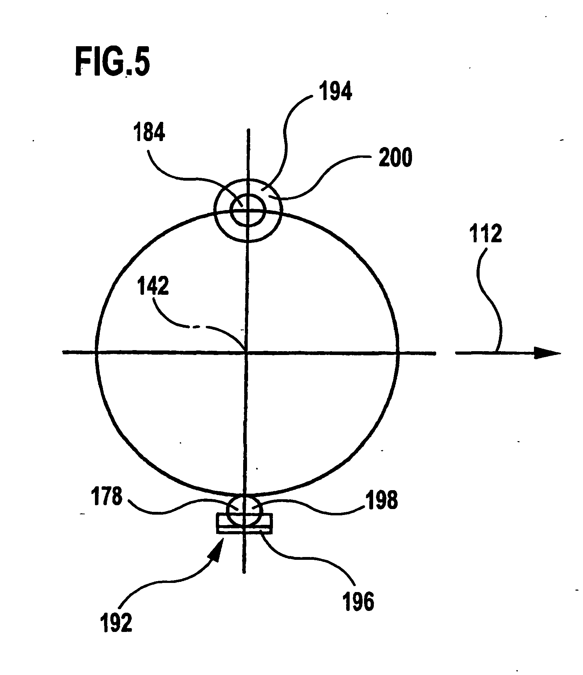

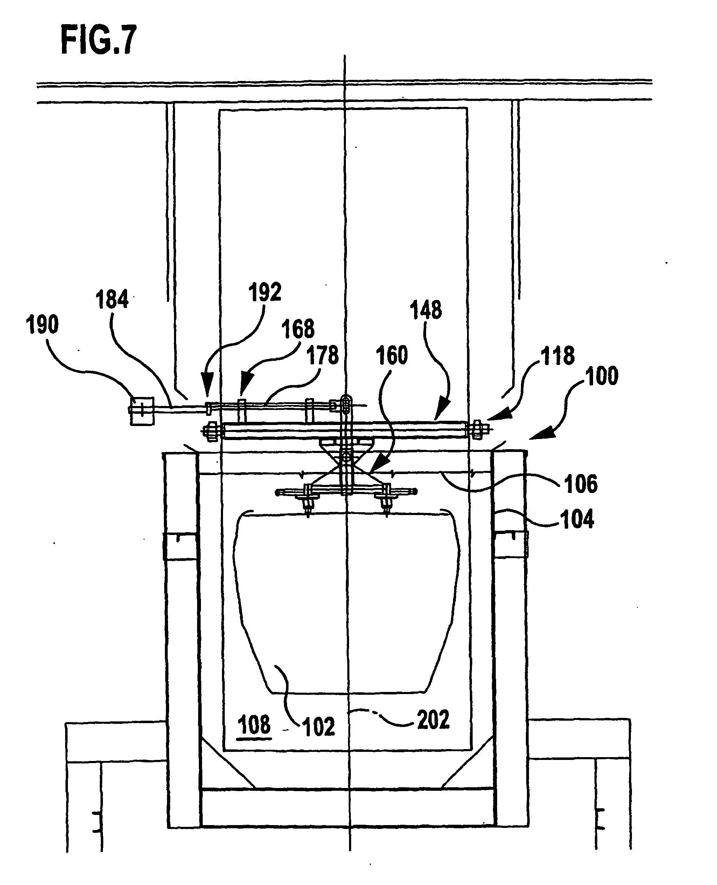

Durch die Eindrehbewegung des Drehteils 148 ist das erste Schubstangenteil 178, das an dem Drehteil 148 angeordnet ist, von seiner ursprünglichen Lage unterhalb der Eindrehachse 142 in die in den Fig. 7 und 8 dargestellte Lage oberhalb der Eindrehachse 142 bewegt worden, wodurch die basisteilseitige Stirnfläche 198 des ersten Schubstangenteils 178, welche ursprünglich senkrecht unter der drehteilseitigen Stirnfläche 200 des Kopplungsflansches 194 angeordnet war (siehe Fig. 5) zur Anlage an der drehteilseitigen Stirnfläche 200 (siehe Fig. 9) kommt, wobei zugleich der Kopplungswinkel 196 den Kopplungsflansch 194 umgreift.

Durch die Eindrehbewegung des Drehteils 148 ist somit die Kopplung des ersten Schubstangenteils 178 an den zweiten Schubstangenteil 184 erfolgt.

Während die Translationsbewegung des Basisteils 120 fortgesetzt wird, wird nunmehr eine Drehbewegung des Halteteils 160 um die Drehachse 152 erzeugt, indem mittels des Drehantriebsmotors 190 das zweite Schubstangenteil 184 längs seiner Längsachse 186 hin- und herbewegt wird, was eine entsprechende Hin- und Herbewegung des ersten Schubstangenteils 178 längs dessen Längsachse 180 zur Folge hat.

Diese lineare Hin- und Herbewegung wird mittels des in dem Langloch 172 geführten Verbindungszapfens 174 in eine Drehbewegung des Halteteils 160 um die Drehachse 152 umgewandelt.

Bei dieser Drehbewegung handelt es sich um eine oszillierende Drehbewegung, bei welcher die Drehrichtung periodisch umgekehrt wird.

So bewegt sich die Fahrzeugkarosserie 102 im Zuge dieser oszillierenden Drehbewegung aus der in Fig. 7 dargestellten Ausgangsstellung, in welcher die vertikale Längsmittelebene 202 der Fahrzeugkarosserie 102 im wesentlichen vertikal ausgerichtet ist, (in der Translationsrichtung 112 gesehen) im Uhrzeigersinn, bis die Längsmittelebene 202 einen maximalen Winkel von beispielsweise ungefähr 30° mit der Vertikalen einschließt. Daraufhin kehrt sich die Bewegungsrichtung der Linearbewegung des zweiten Schubstangenteils 184 und damit die Drehrichtung der Drehbewegung des Halteteils 160 um, so daß sich die Fahrzeugkarosserie 102 durch ihre Ausgangsstellung hindurch (in der Translationsrichtung 112 gesehen) im Gegenuhrzeigersinn um die Drehachse 152 dreht, bis die Längsmittelebene 202 der Fahrzeugkarosserie 102 mit der Vertikalen wiederum einen maximalen Winkel von ungefähr -30° einschließt.

Diese oszillierende Drehbewegung des Halteteils 160 um die Drehachse 152 wird für eine gewünschte Anzahl von Drehperioden fortgesetzt und abgebrochen, wenn sich die Fahrzeugkarosserie 102 nach einer ganzen Zahl von halben Drehperioden wieder in der Ausgangsstellung befindet.

Die Drehbewegung des Halteteils 160 um die Drehachse 152 kann auch ein- oder mehrfach unterbrochen und wieder aufgenommen werden, während die Fahrzeugkarosserie 102 durch das Tauchbad 108 bewegt wird.

Ferner ist auch denkbar, daß die Drehbewegung des Halteteils 160 um die Drehachse 152 bereits während des Eintauchvorgangs begonnen und/oder während des Austauchvorgangs der Fahrzeugkarosserie 102 fortgesetzt wird.

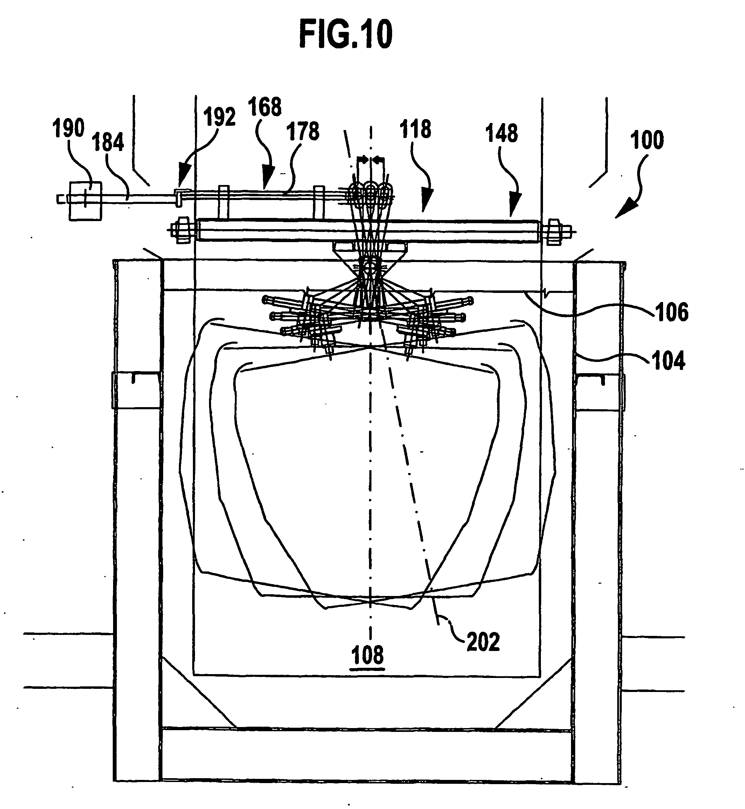

Dadurch, daß die Fahrzeugkarosserie 102 im vollständig eingetauchten Zustand in dem Tauchbad 108 aus der Ausgangsstellung in die in Fig. 10 dargestellten Schräglagen gebracht wird, können Luftblasen, die während des Eintauchvorgangs in Hohlräumen oder an im eingetauchten Zustand nach unten weisenden Oberflächen der Fahrzeugkarosserie 102 entstanden sind, sich von der Fahrzeugkarosserie 102 lösen und nach oben aus dem Tauchbad 108 entweichen.

Auf diese Weise werden Blasen in effizienter Weise insbesondere von den Sitzaufnahmen und von der Ersatzradaufnahme der Fahrzeugkarosserie 102 entfernt, so daß eine mangelhafte Behandlung, insbesondere eine mangelhafte Beschichtung, der genannten Stellen der Fahrzeugkarosserie 102 sowie insbesondere der Schweller und Leisten der Fahrzeugkarosserie 102 vermieden wird.

Durch die Schräglage der Fahrzeugkarosserie 102 in dem Tauchbad 108 werden die Luftblasen, insbesondere in Verbindung mit der Drehbewegung der Fahrzeugkarosserie um die Drehachse 152 und mit der Translationsbewegung der Fahrzeugkarosserie längs der Translationsrichtung 112, besonders wirksam entfernt.

In Kombination mit der Eindrehbewegung der Fahrzeugkarosserie 102 in das Tauchbad 108 um die Eindrehachse 142 ergibt sich durch die Drehbewegung der Fahrzeugkarosserie 102 um die zur Eindrehachse 142 senkrechte Drehachse 152 eine besonders wirksame Durchspülung der Fahrzeugkarosserie 102.

Um die Durchspülung der Fahrzeugkarosserie 102 noch zu verbessern, kann vorgesehen sein, daß die Fahrzeugkarosserie 102 während der Drehbewegung um die Drehachse 152 zusätzlich im Tauchbad 108 leicht angehoben und/oder abgesenkt wird. Dies kann dadurch erreicht werden, daß die Führungsschienen 116a, 116b im Bereich des Tauchbads 108 nicht überall horizontal verlaufen, sondern ansteigende und abfallende Abschnitte umfassen.

Da sich im Bereich des Badspiegels 106 Verunreinigungen in dem Tauchbad 108 ansammeln, wird die Drehbewegung der Fahrzeugkarosserie 102 um die Drehachse 152 so ausgeführt, daß kein Teil der Fahrzeugkarosserie 102 während der Drehbewegung in den Bereich des Tauchbads 108 gelangt, welcher von dem Badspiegel 106 einen Abstand von weniger als 5 cm aufweist.

Auf diese Weise wird eine Ablagerung von Verunreinigungen, die sich an der Oberseite des Tauchbads 108 angesammelt haben, an der Fahrzeugkarosserie 102 wirksam vermieden.

Wenn die Fahrzeugkarosserie 102 aufgrund der Translationsbewegung des Basisteils 120 längs der Führungseinrichtung 114 den Endbereich des Tauchbads 108 erreicht hat, wird die Fahrzeugkarosserie 102 aus dem Tauchbad 108 wieder ausgebracht, indem das Drehteil 148 um einen Winkel von 180° um die Eindrehachse 142 relativ zu dem Basisteil 120 gedreht wird.

Diese Ausdrehbewegung des Drehteils 148 kann mit derselben Drehrichtung wie die Eindrehbewegung oder mit der Eindrehbewegung entgegengesetzter Drehrichtung erfolgen.

Die Translationsbewegung des Basisteils 120 kann während der Ausdrehbewegung des Drehteils 148 fortgesetzt werden oder unterbrochen sein.

Ferner ist es möglich, das Basisteil 120 während der Ausdrehbewegung des Drehteils 148 zumindest abschnittsweise entgegen der Translationsrichtung 112 zurückzubewegen.

Nach dem Ausbringen der Fahrzeugkarosserie 102 aus dem Tauchbad 108 wird das Halterungsgestell 118 in eine (nicht dargestellte) Entladungsstation bewegt, in welcher die Fahrzeugkarosserie 102 mit dem Skidrahmen 158 nach Lösen der Einspannvorrichtungen 156 von dem Halteteil 160 abgenommen wird.

Um zu verhindern, daß sich die Fahrzeugkarosserie 102 vor Beginn oder nach Ende der erwünschten Drehbewegung um die Drehachse 152 spontan um die Drehachse 152 dreht, kann vorgesehen sein, daß der Halteteil 160 durch eine geeignete Rasteinrichtung in der Ausgangsstellung der Fahrzeugkarosserie 102, in welcher deren Längsmittelebene 202 vertikal ausgerichtet ist, relativ zu dem Drehteil 148 arretierbar ist. Diese Arretierung wird zu Beginn der Drehbewegung gelöst und nach deren Beendigung wiederhergestellt.

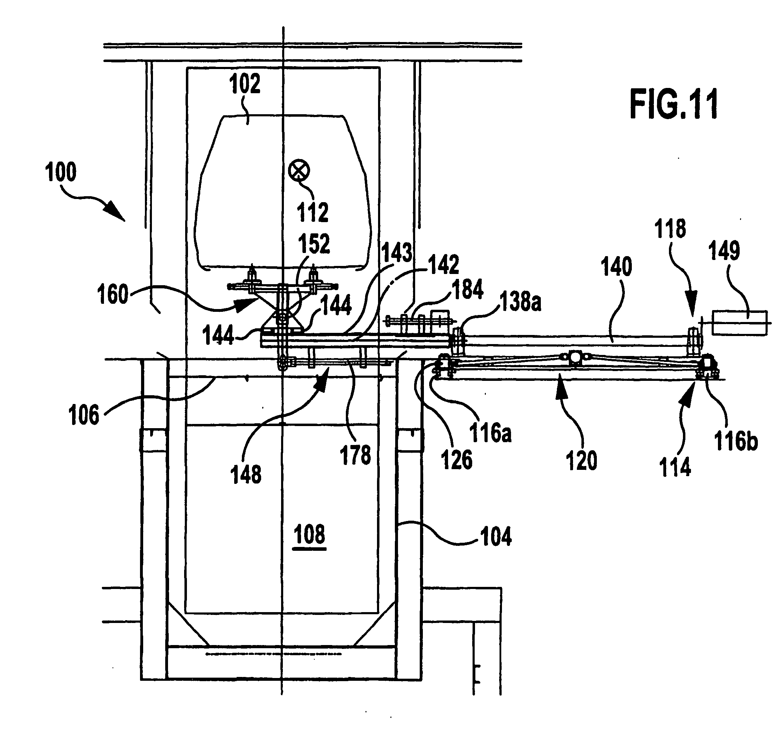

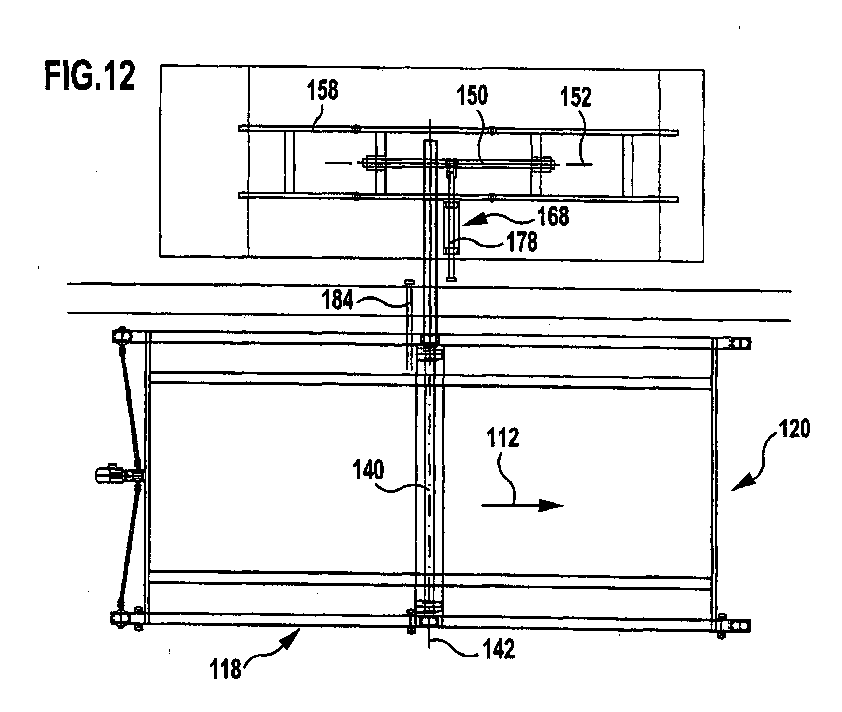

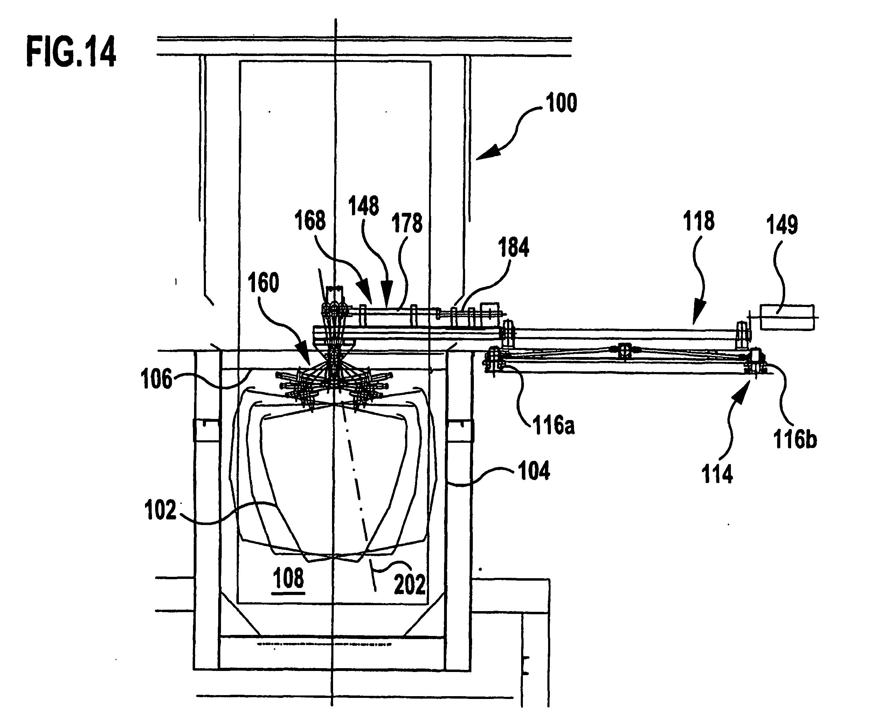

Eine in den Fig. 11 bis 14 dargestellte zweite Ausführungsform einer Vorrichtung 100 zur Oberflächenbehandlung von Fahrzeugkarosserien 102 unterscheidet sich von der vorstehend beschriebenen ersten Ausführungsform dadurch, daß die Führungsschienen 116a, 116b nicht auf verschiedenen Seiten des Tauchbads 108 angeordnet sind, sondern vielmehr bei auf derselben Seite des Tauchbads 108 angeordnet sind.

Bei dieser zweiten Ausführungsform ist die Drehplattform 143 des Drehteils 148 nicht zwischen den Lagerböcken 138 der Eindrehwelle 140, sondern an einem über den tauchbadseitigen Lagerbock 138a überstehenden freien Ende der Eindrehwelle 140 angeordnet, so daß die Drehplattform 143 über den Basisteil 120 des Halterungsgestells 118 zu dem Tauchbad 108 hin übersteht.

Im übrigen stimmt diese zweite Ausführungsform hinsichtlich Aufbau und Funktion mit der ersten Ausführungsform überein, auf deren vorstehende Beschreibung insoweit Bezug genommen wird.

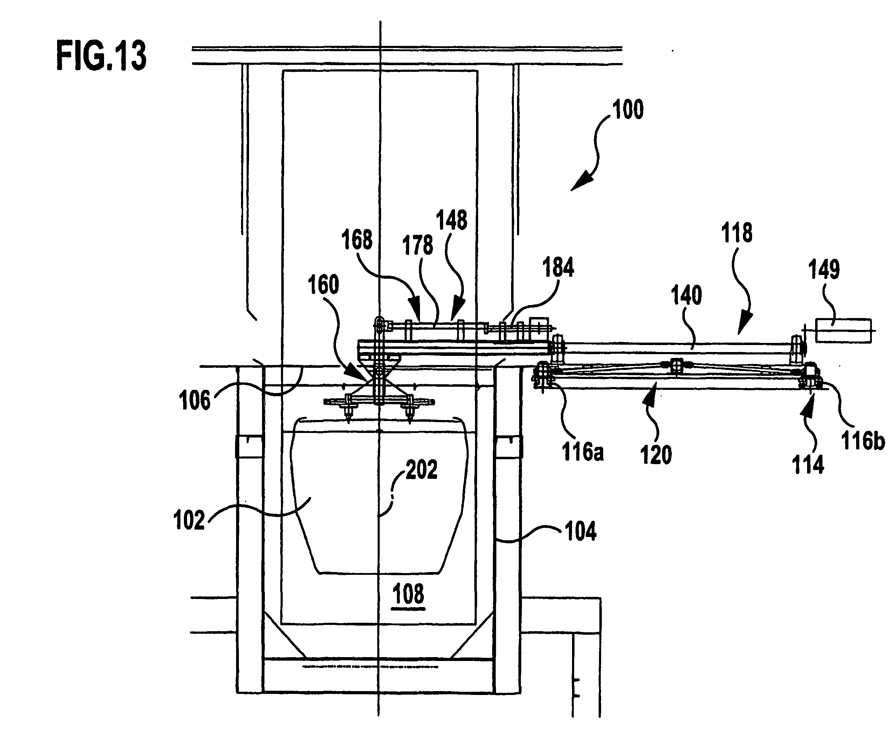

Insbesondere ist auch bei der zweiten Ausführungsform das erste Schubstangenteil 178 an dem Drehteil 148 und das zweite Schubstangenteil 184 an dem Basisteil 120 angeordnet, wobei beide Schubstangenteile 178, 184 durch die Eindrehbewegung des Drehteils 148 aus der in Fig. 11 dargestellten entkoppelten Stellung in die Fig. 13 dargestellte Kopplungsstellung gebracht werden.

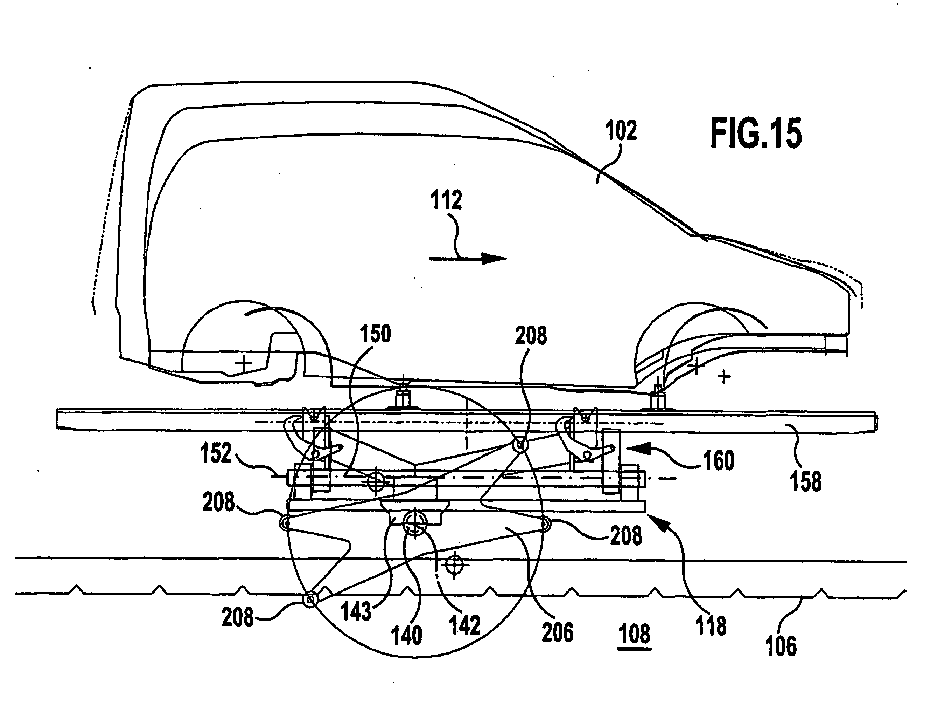

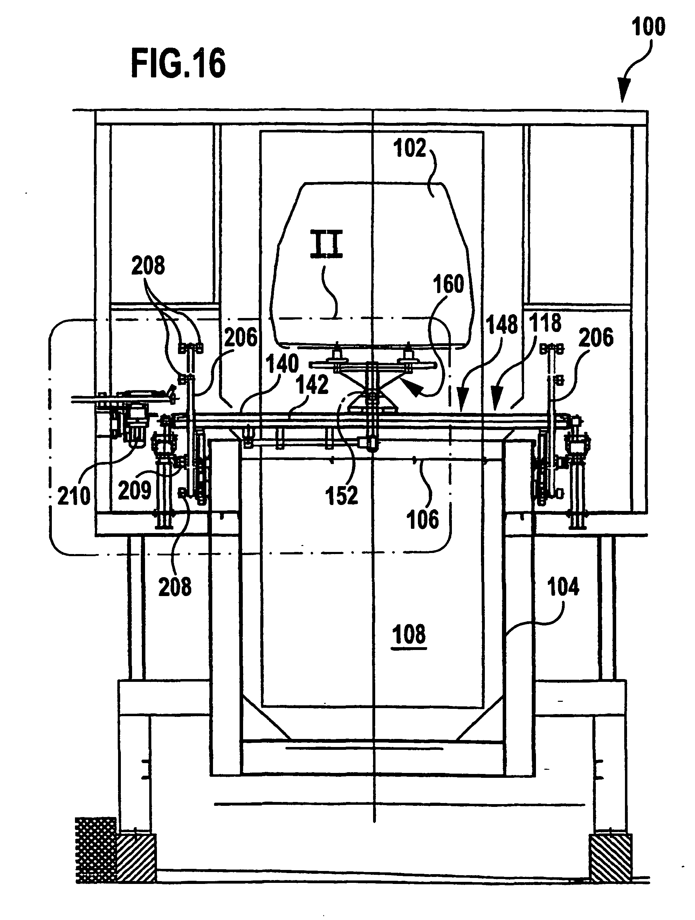

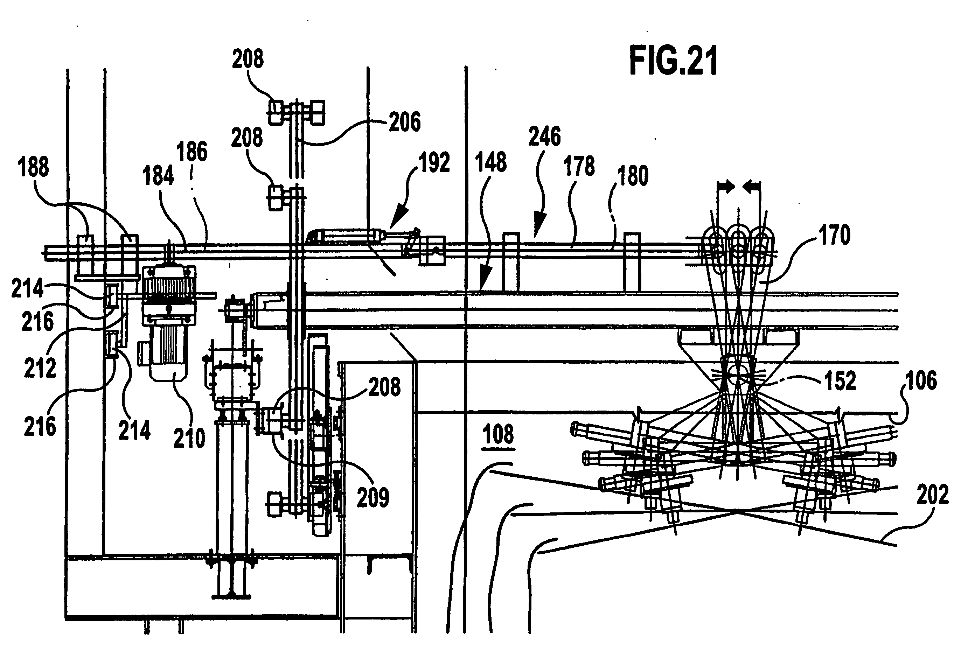

Eine in den Fig. 15 bis 22 dargestellte dritte Ausführungsform einer Vorrichtung 100 zur Oberflächenbehandlung von Fahrzeugkarosserien 102 unterscheidet sich von der vorstehend beschriebenen ersten Ausführungsform dadurch, daß das Halterungsgestell 118 der dritten Ausführungsform kein Basisteil umfaßt, welches mittels eines an dem Halterungsgestell 118 selbst angeordneten Translationsantriebsmotors längs der Führungseinrichtung 114 fortbewegt wird, sondern statt dessen vorgesehen ist, daß jedes Halterungsgestell 118 mittels eines umlaufenden Fördermittels, insbesondere einer Förderkette, mit welchem das Halterungsgestell 118 verbunden ist, längs der Translationsrichtung 112 fortbewegt wird.

Bei dieser Ausführungsform umfaßt die Fördervorrichtung 110 auf beiden Seiten des Tauchbads 108 jeweils eine Förderkette 204, welche aus in der Längsrichtung der Förderkette 204 aufeinanderfolgenden, gelenkig miteinander verbundenen Kettengliedern besteht, wobei einige dieser Kettenglieder mit Kettentragrollen und/oder Kettenführungsrollen versehen sind, mit welchen die jeweilige Förderkette 204 an der jeweils zugeordneten Führungsschiene 116a, 116b der Führungseinrichtung 114 geführt ist.

Die Förderketten 204 werden mittels einer nicht dargestellten Antriebseinrichtung, welche beispielsweise Zahnräder und/oder Caterpillar-Antriebsketten umfaßt, zu einer kontinuierlichen oder intermittierenden Umlaufbewegung längs der Führungseinrichtung 114 angetrieben.

Die Eindrehwelle 140 eines Halterungsgestells 118 dieser Ausführungsform ist mit ihren Enden um die Eindrehachse 142 drehbar an einander gegenüberliegenden Kettengliedern der Förderketten 204 gelagert und wird somit zusammen mit den Förderketten 204 längs der Translationsrichtung 112 bewegt.

Der Basisteil 120 der ersten beiden Ausführungsformen entfällt bei der dritten Ausführungsform.

Für den Antrieb der Eindrehbewegung und der Ausdrehbewegung des Drehteils 148 der dritten Ausführungsform ist kein mit dem Halterungsgestell 118 mitbewegter Eindrehantriebsmotors vorgesehen.

Vielmehr ist für den Antrieb der Eindrehbewegung und der Ausdrehbewegung an jedem Ende der Eindrehwelle 140 jeweils ein vierarmiges Drehkreuz 206 vorgesehen, welches an dem Ende jeden Armes jeweils eine um eine horizontale Drehachse drehbar gelagerte Leitrolle 208 trägt.

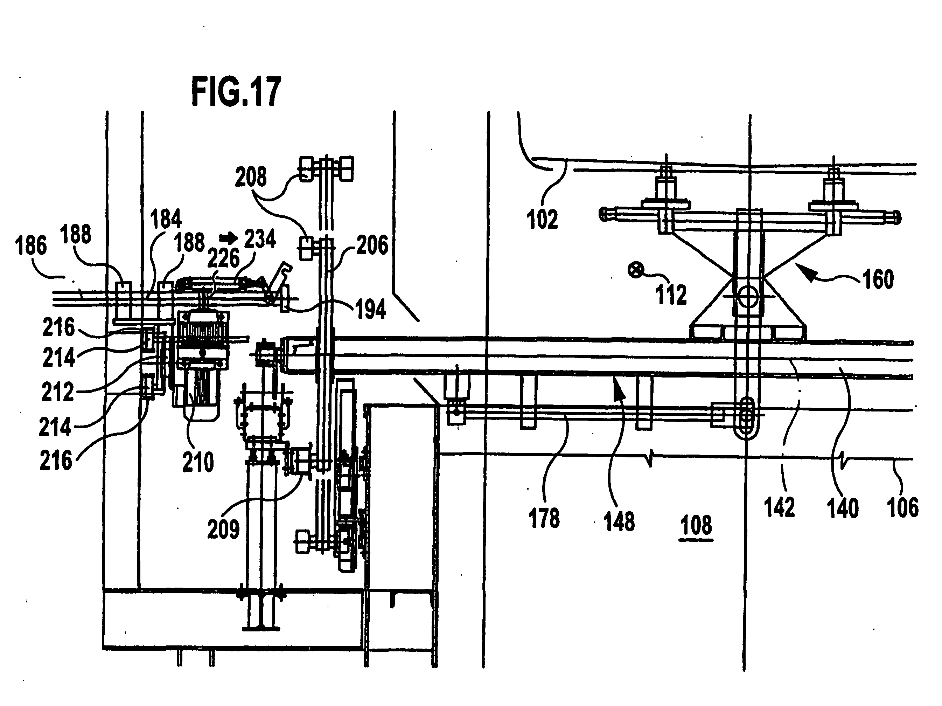

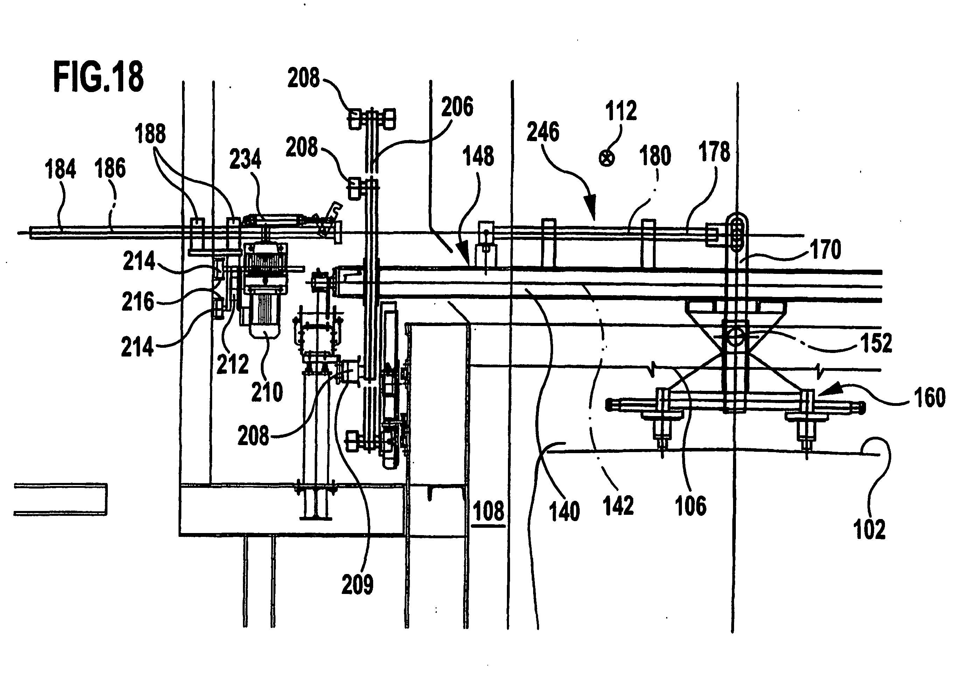

Zu jedem Zeitpunkt rollt mindestens eine der Leitrollen 208 jeden Drehkreuzes 206 an einer ortsfest angeordneten Leitschiene 209 der Fördervorrichtung 110 ab (siehe Fig. 17 und 18).

Im Anfangsbereich des Tauchbads 108 ist diese Leitschiene so gestaltet, daß die Leitrollen 208 des Drehkreuzes 206 derart geführt werden, daß die Drehkreuze 206 und damit der gesamte Drehteil 148 des Halterungsgestells 118 während der Translationsbewegung des Halterungsgestells 118 längs der Translationsrichtung 112 zugleich eine Drehung um 180° um die Eindrehachse 142 relativ zu den Förderketten 204 ausführen. Durch die Kombination aus der Translationsbewegung aufgrund der Förderketten 204 und der Eindrehbewegung aufgrund des Zusammenwirkens der Drehkreuze 206 mit den Leitschienen der Fördervorrichtung 110 wird die Fahrzeugkarosserie 102 bei dieser Ausführungsform, ebenso wie bei den vorstehend beschriebenen Ausführungsformen, aus der in Fig. 15 dargestellten Standardstellung in die in Fig. 18 dargestellte Kopfüberstellung innerhalb des Tauchbads 108 überführt.

In entsprechender Weise sind die Leitschienen der Fördervorrichtung 110 im Endbereich des Tauchbads 108 so gestaltet, daß die Drehkreuze 206 aufgrund des Zusammenwirkens der Leitrollen 208 mit den Leitschienen wiederum um 180° um die Eindrehachse 142 gedreht werden, so daß die Fahrzeugkarosserie 102 aus der Kopfüberstellung in dem Tauchbad 108 wieder in die Standardstellung oberhalb des Tauchbades 108 überführt wird.

Ein solcher Antrieb der Eindrehbewegung und der Ausdrehbewegung eines Drehteils eines Halterungsgestells ist bereits in der DE 196 41 048 A1 ausführlich beschrieben, so daß für eine detaillierte Beschreibung dieser Art eines Drehantriebs auf die genannte Druckschrift verwiesen werden kann, deren Offenbarung hiermit durch Inbezugnahme zum Bestandteil der Beschreibung dieser Patentanmeldung gemacht wird.

Ein weiterer Unterschied zwischen der dritten Ausführungsform einer Vorrichtung 100 zur Oberflächenbehandlung von Fahrzeugkarosserien 102 und der vorstehend beschriebenen ersten Ausführungsform liegt darin, daß die Drehbewegung des Halteteils 116 um die Drehachse 152 nicht mittels eines an dem Halterungsgestell 118 fest angeordneten Drehantriebsmotors, sondern statt dessen mittels eines externen Drehantriebsmotors angetrieben wird, welcher nach dem Eintauchen der Fahrzeugkarosserie 102 in das Tauchbad 108 mit dem ersten Schubstangenteil 178 des Drehteils 148 gekoppelt und nach Beendigung der Drehbewegung des Halteteils 160 um die Drehachse 152 wieder von dem ersten Schubstangenteil 178 abgekoppelt wird.

Wie beispielsweise aus der Fig. 17 zu ersehen ist, ist dieser externe Drehantriebsmotor 210 an einer beweglichen Halterung 212 angeordnet, welche mittels Führungsrollen 214 an parallel zur Translationsrichtung 112 verlaufenden Führungsprofilen 216 längs der Translationsrichtung 112 verschieblich geführt ist.

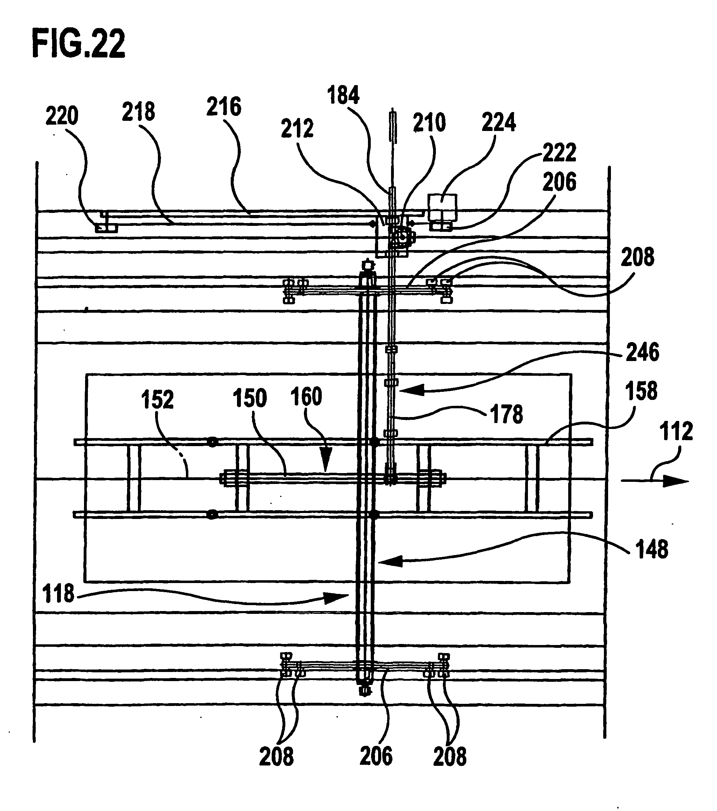

Zum Antrieb der Translationsbewegung der Halterung 212 kann beispielsweise eine Förderkette 218 dienen, welche um eine nicht angetriebene Umlenkrolle 220 und eine angetriebene Umlenkrolle 222 gelegt ist, wobei die angetriebene Umlenkrolle 222 mittels eines Antriebsmotors 224 in eine Drehbewegung versetzbar ist (siehe Fig. 22).

Die Halterung 212 ist so mit der Förderkette 218 verbunden, daß sie durch Inbetriebnahme des Antriebsmotors 224 parallel oder entgegengesetzt zur Translationsrichtung 112 bewegbar ist (siehe insbesondere Fig. 22).

Wie am besten aus Fig. 17 zu ersehen ist, sind an der beweglichen Halterung 212 auch zwei Lagerböcke 188 festgelegt, an welchen ein zweites Schubstangenteil 184 um seine Längsachse 186 drehbar gelagert ist.

Das zweite Schubstangenteil 184 ist an seinem den Halterungsgestellen 118 zugewandten Ende mit einem Kopplungsflansch 194 versehen.

Der externe Drehantriebsmotor 210 treibt ein Zahnrad 226 an, welches mit einem als Zahnstange ausgebildeten Abschnitt des zweiten Schubstangenteils 184 in Eingriff steht, so daß das zweite Schubstangenteil 184 durch Drehen des Zahnrads 226 längs seiner Längsachse 186 verschiebbar ist.

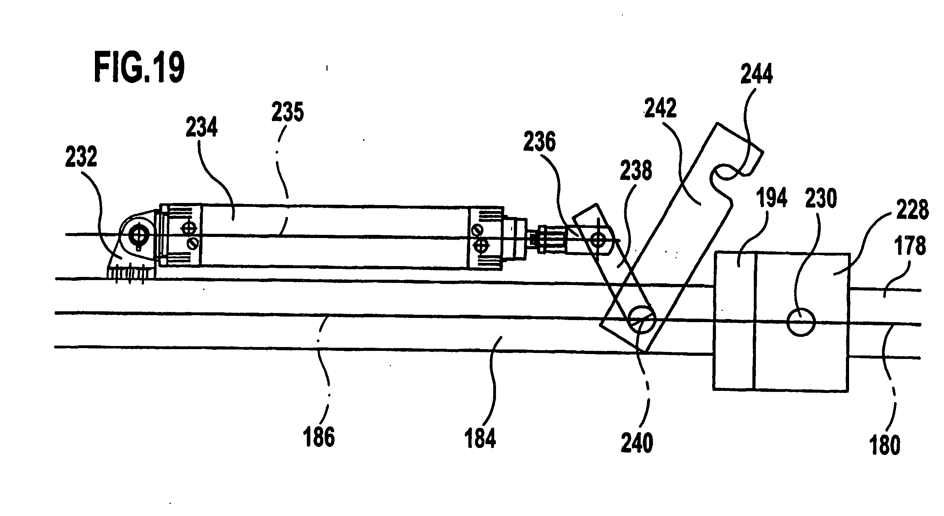

Auf diese Weise kann der Kopplungsflansch 194 des zweiten Schubstangenteils 184 dann, wenn sich der externe Drehantriebsmotor 210 in seiner Ausgangsstellung befindet und ein Halterungsgestell 118 neben den externen Drehantriebsmotor 210 bewegt worden ist, an dem drehantriebsmotorseitigen Drehkreuz 206 dieses Halterungsgestells 118 vorbeibewegt und mit dem ersten Schubstangenteil 178 des Drehteils 148 dieses Halterungsgestells 118 in Kontakt gebracht werden, wie dies in Fig. 19 dargestellt ist.

Bei dieser dritten Ausführungsform ist das drehteilseitige erste Schubstangenteil 178 koaxial zu dem zweiten Schubstangenteil 184 ausgerichtet, wenn sich die Fahrzeugkarosserie 102 im vollständig in das Tauchbad 108 eingetauchten Zustand befindet.

Das dem zweiten Schubstangenteil 184 zugewandte Ende des ersten Schubstangenteils 178 ist bei dieser Ausführungsform nicht mit einem Kopplungswinkel, sondern statt dessen mit einem zylindrischen Kopplungsflansch 228 versehen, von welchem zwei Kopplungszapfen 230 in einander entgegengesetzte radiale Richtungen abstehen (in Fig. 19 ist nur einer dieser Kopplungszapfen zu sehen).

An dem zweiten Schubstangenteil 184 ist über eine radial von demselben abstehende Lasche 232 ein Verschiebezylinder 234 angelenkt, in welchem ein pneumatisch, hydraulisch oder in anderer geeigneter Weise längs der Längsrichtung 235 des Verschiebezylinders 234 verschiebbarer Verschiebestempel 236 aufgenommen ist.

Ein dem Kopplungsflansch 194 zugewandtes Ende des Verschiebestempels 236 ist gelenkig mit zwei Antriebshebeln 238 verbunden, die ferner um eine radial zu der Längsachse 186 des zweiten Schubstangenteils 184 verlaufende horizontale Drehachse 240 drehbar an dem zweiten Schubstangenteil 184 angelenkt und jeweils mit einem Verriegelungshebel 242 starr verbunden sind.

An seinem freien, der Drehachse 240 abgewandten Ende weist jeder der Verriegelungshebel 242 jeweils eine Verriegelungsausnehmung 244 zur Aufnahme jeweils eines der Kopplungszapfen 230 des Kopplungsflansches 228 des ersten Schubstangenteils 178 auf.

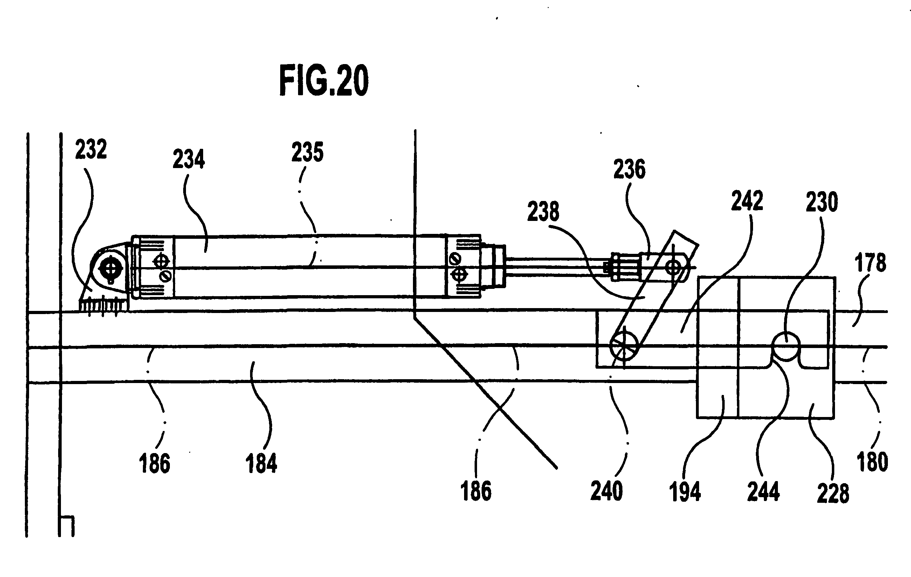

Wenn die Kopplungsflansche 194 und 228 der beiden Schubstangenteile 184 bzw. 178 aneinander anliegen, wie in Fig. 19 dargestellt, können die beiden Schubstangenteile 178, 184 dadurch miteinander gekoppelt werden, daß der Verschiebestempel 236 durch Betätigung des Verschiebezylinders 238 aus demselben herausgeschoben wird, was eine Drehung der Antriebshebel 238 und damit der Verriegelungshebel 242 (in der Blickrichtung der Fig. 19 gesehen) im Uhrzeigersinn zur Folge hat, so daß sich jeder der Verriegelungshebel 242 über den jeweils zugeordneten Kopplungszapfen 230 absenkt und denselben hintergreift, bis die in Fig. 20 dargestellte Kopplungsstellung erreicht ist, in welcher die Kopplungszapfen 230 vollständig in den Verriegelungsausnehmungen 244 der Verriegelungshebel 242 aufgenommen sind.

In dieser Kopplungsstellung sind die beiden Schubstangenteile 178, 184 längs der Längsachsen 180, 186 formschlüssig miteinander verbunden, so daß in dieser Kopplungsstellung das erste Schubstangenteil 178 einer linearen Hinund Herbewegung des zweiten Schubstangenteils 184 längs dessen Längsachse 186 folgt.

Folglich kann, in der bereits vorstehend im Zusammenhang mit dem ersten Ausführungsbeispiel erläuterten Weise, mittels des externen Drehantriebsmotors 210 über die lineare Hin- und Herbewegung der Schubstangenteile 178, 184 eine oszillierende Drehbewegung des Halteteils 160 des Halterungsgestells 118 um die Drehachse 152 erzeugt werden.

Zur Herstellung der Kopplung zwischen den beiden Schubstangenteilen 178, 184 können die Förderketten 104, welche die Halterungsgestelle 118 längs der Translationsrichtung 112 bewegen, kurzzeitig angehalten werden.

Während die Schubstangenteile 178, 184 aneinander gekoppelt sind, wird die bewegliche Halterung 212 mit dem externen Drehantriebsmotor 210 längs der Translationsrichtung 112 mit der gleichen Geschwindigkeit wie das angekoppelte Halterungsgestell 118 mitbewegt.

Wenn die erwünschte Drehbewegung des Halteteils 160 um die Drehachse 152 abgeschlossen ist, wird das zweite Schubstangenteil 184 von dem ersten Schubstangenteil 178 abgekoppelt, indem der Verschiebezylinder 234 so betätigt wird, daß der Verschiebestempel 236 in den Verschiebezylinder 234 zurückgezogen wird, wodurch sich die Verriegelungshebel 242 von den Kopplungszapfen 230 lösen und in die in Fig. 19 dargestellte entkoppelte Stellung zurückkehren.

Anschließend wird das zweite Schubstangenteil 184 längs seiner Längsachse 186 mittels des externen Drehantriebsmotors 210 an dem Drehkreuz 206 des Halterungsgestells 118 vorbeibewegt, so daß sich das zweite Schubstangenteil 184 und das Drehkreuz 206 bei der Weiterbewegung des Halterungsgestells 118 längs der Translationsrichtung 112 nicht gegenseitig behindern.

Anschließend wird die bewegliche Halterung 212 mit dem externen Drehantriebsmotor 210 mittels des Antriebsmotors 224 und der Förderkette 218 in zu der Translationsrichtung 112 entgegengesetzter Richtung in ihre Ausgangsstellung zurückbewegt.

In dieser Ausgangsstellung verbleibt der externe Drehantriebsmotor 210, bis das nächste Halterungsgestell 118 neben denselben bewegt wird und ein erneuter Ankopplungsvorgang erfolgt.

Bei dieser Ausführungsform bildet das erste Schubstangenteil 178 zusammen mit dem Drehhebel 170 eine halterungsgestellseitge Drehantriebsvorrichtung 246, an welche der externe Drehantriebsmotor 210 zur Durchführung der Drehbewegung ankoppelt.

Wie aus den Fig. 19 und 20 zu ersehen ist, sind die Antriebshebel 238 und die Verriegelungshebel 242 so ausgestaltet und angeordnet, daß die Verriegelungshebel 242 in der Kopplungsstellung (Fig. 20) parallel zur Längsachse 186 des zweiten Schubstangenteils 184 ausgerichtet sind und daß der Verschiebezylinder 234 sowohl in der Kopplungsstellung (Fig. 20) als auch in der völlig entkoppelten Stellung (Fig. 19) parallel zu der Längsachse 186 des zweiten Schubstangenteils 184 ausgerichtet ist. Dadurch wird erreicht, daß über die Kopplung zwischen den beiden Schubstangenteilen 178, 184 besonders große Kräfte übertragen werden können, ohne den Verschiebezylinder 234 mechanisch zu belasten.

In den Zwischenstellungen der aus dem Verschiebezylinder 234, dem Verschiebestempel 236, den Antriebshebeln 238, den Verriegelungshebeln 242 und den Kopplungsflanschen 194, 228 gebildeten Kopplungseinrichtung 192 ist die Achse des Verschiebezylinders 234 hingegen leicht gegen die Längsachse 186 des zweiten Schubstangenteils 184 geneigt, weshalb es erforderlich ist, den Verschiebezylinder 234 gelenkig mit dem zweiten Schubstangenteil 184 zu verbinden.

Die vorstehend beschriebene Ausgestaltung einer Kopplungseinrichtung 192 kann auch bei den ersten beiden Ausführungsformen einer Vorrichtung 100 zur Oberflächenbehandlung von Fahrzeugkarosserien 102 statt der dort beschriebenen Ausgestaltung einer Kopplungseinrichtung 192 verwendet werden.

Im übrigen stimmt die dritte Ausführungsform einer Vorrichtung 100 zur Oberflächenbehandlung von Fahrzeugkarosserien 102 hinsichtlich Aufbau und Funktion mit der ersten Ausführungsform überein, auf deren vorstehende Beschreibung insoweit Bezug genommen wird.

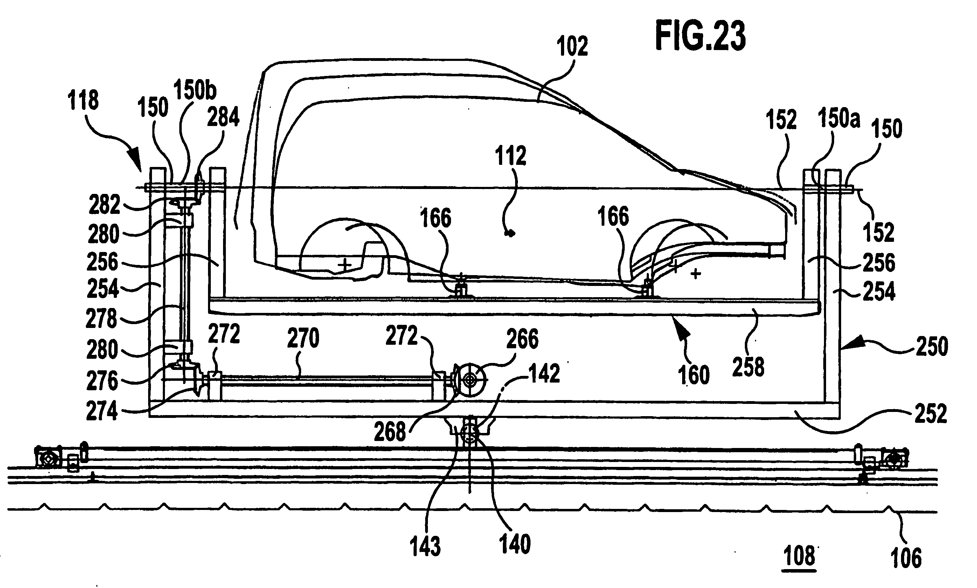

Eine in den Fig. 23 bis 26 dargestellte vierte Ausführungsform einer Vorrichtung 100 zur Oberflächenbehandlung von Fahrzeugkarosserien 102 unterscheidet sich von der vorstehend beschriebenen ersten Ausführungsform dadurch, daß der Halteteil 160 des Halterungsgestells 118 nicht lediglich um +/- 30° aus der Ausgangsstellung relativ zu dem Drehteil 148 des Halterungsgestells 118 drehbar ist, sondern vielmehr frei um die Drehachse 152 gedreht werden kann.

Jedes Halterungsgestell 118 der vierten Ausführungsform weist einen wie der Basisteil 120 der ersten Ausführungsform ausgebildeten Basisteil auf, an dem die Eindrehwelle 140 und eine drehfest mit derselben verbundene Drehplattform 143 drehbar gelagert sind.

Die Drehplattform 143 trägt bei der fünften Ausführungsform ein Drehgestell 250 mit senkrecht zur Eindrehachse 142 ausgerichteten Längsträgern 252, die parallel zueinander ausgerichtet sind und von deren Enden Vertikalstreben 254 senkrecht zu den Längsträgern 252 abstehen.

An den den Längsträgern 252 abgewandten Enden der Vertikalstreben 254 ist jeweils eine Drehwelle 150 um eine zur Eindrehachse 142 senkrechte Drehachse 152 drehbar gelagert, wobei es sich bei der (in der Translationsrichtung 112 gesehen) vorderen Drehwelle 150 um eine nicht angetriebene Drehwelle 150a und bei der (in der Translationsrichtung 112 gesehen) hinten liegenden Drehwelle 150 um eine angetriebene Drehwelle 150b handelt.

Die von den Vertikalstreben 254 des Drehgestells 250 nach innen abstehenden Enden der Drehwellen 150 sind drehfest mit Vertikalstreben 256 eines drehbar an dem Drehgestell 250 aufgehängten Halterahmens 256 verbunden.

Die den Drehwellen 150 abgewandten Enden der Vertikalstreben 254 sind über eine sich parallel zu der Drehachse 152 erstreckende Halteplattform 258 des Halterahmens 256 miteinander verbunden. An der Halteplattform 258 sind Arretiervorrichtungen 166 angeordnet, mittels welcher die Fahrzeugkarosserie 102 lösbar an dem Halterahmen 256 festlegbar ist.

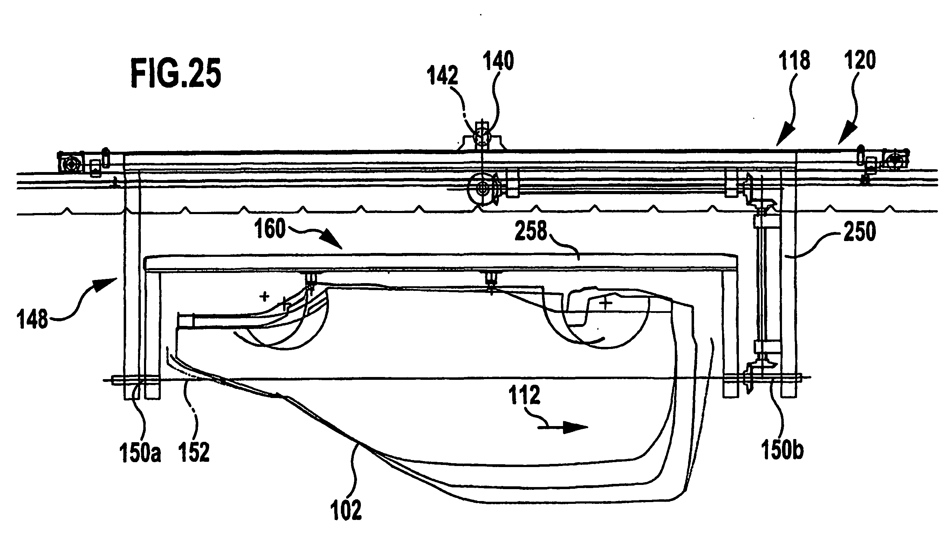

In den Fig. 23 und 25 sind mehrere mögliche Außenkonturen für die Fahrzeugkarosserie 102 dargestellt.

Die Drehwellen 150 und der Halterahmen 256 mit den Arretiervorrichtungen 166 bilden zusammen den Halteteil 160 des Halterungsgestells 118 bei der vierten Ausführungsform einer Vorrichtung 100 zur Oberflächenbehandlung von Fahrzeugkarosserien 102.

Bei dieser Ausführungsform verläuft die Drehachse 152 durch die Fahrzeugkarosserie 102 hindurch, während sie bei der ersten bis dritten Ausführungsform vollständig außerhalb der Fahrzeugkarosserie 102 verläuft.

Der Antrieb der Drehbewegung des Halteteils 160 um die Drehachse 152 erfolgt mittels eines mit dem Halterungsgestell 118 mitbewegten Drehantriebsmotors 190, der an einer Konsole 260 festgelegt ist, welche mit den Längsträgern 252 des Drehgestells 250 verbunden ist.

Die Konsole 260 trägt auch zwei Lagerböcke 262, an denen eine Abtriebswelle 264 des Drehantriebsmotors 190 drehbar gelagert ist, welche an ihrem freien Ende ein Kegelzahnrad 266 trägt.

Das Kegelzahnrad 266 kämmt mit einem weiteren Kegelzahnrad 268, welches an einem Ende einer Antriebswelle 270 festgelegt ist, welche in zwei an den Längsträgern 252 des Drehgestells 250 festgelegten Lagerböcken 270 um eine parallel zur Drehachse 252 ausgerichtete Drehachse drehbar gelagert ist.

Das dem Kegelzahnrad 268 abgewandte Ende der Antriebswelle 270 trägt ein weiteres Kegelzahnrad 274, welches mit einem Kegelzahnrad 272 kämmt, das an einem Ende einer Antriebswelle 278 angeordnet ist, welche an Lagerböcken 280, die mit den hinteren Vertikalstreben 254 des Drehgestells 250 verbunden sind, um eine parallel zu den Vertikalstreben 254 verlaufende Drehachse drehbar gelagert ist.

Das dem Kegelzahnrad 176 abgewandte Ende der Antriebswelle 278 ist mit einem Kegelzahnrad 282 versehen, welches mit einem Kegelzahnrad 284 kämmt, das drehfest mit der angetriebenen Drehwelle 150b des Halteteils 160 verbunden ist.

Die vorstehend genannten Elemente, von dem Drehantriebsmotor 190 bis zu dem Kegelzahnrad 284, bilden somit eine Drehantriebsvorrichtung 168, mit welcher der Halteteil 160 um beliebige Winkel und in beliebiger Drehrichtung um seine Drehachse 152 relativ zu dem Drehteil 148 des Halterungsgestells 118 gedreht werden kann.

Bei der vierten Ausführungsform einer Vorrichtung 100 zur Oberflächenbehandlung von Fahrzeugkarosserien 102 werden die Fahrzeugkarosserien 102 nicht mittels Skidrahmen 158, sondern statt dessen direkt auf den Halteteil 160 jeweils eines Halterungsgestells 118 aufgesetzt.

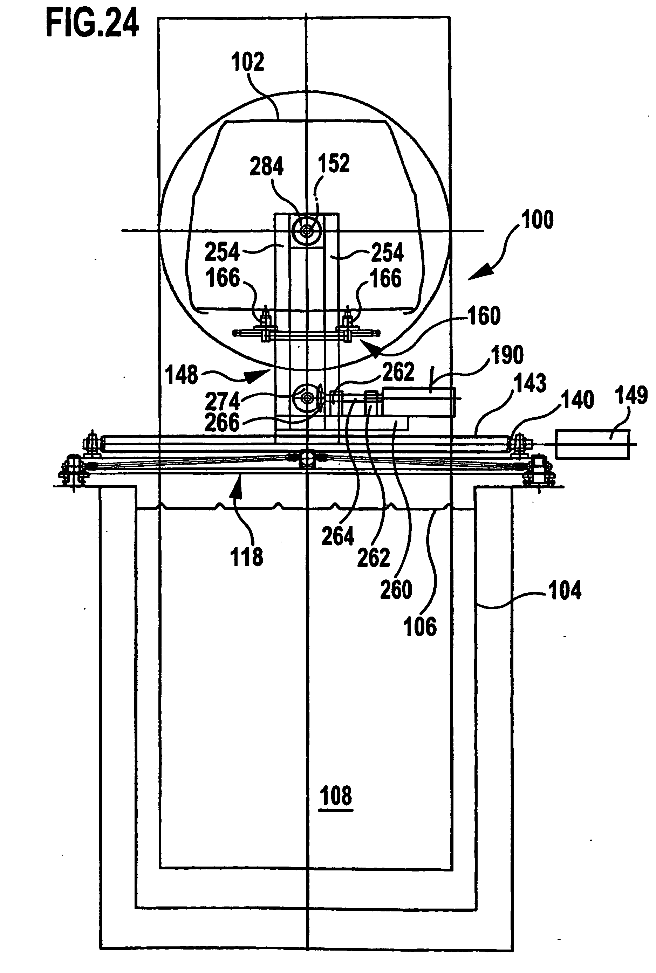

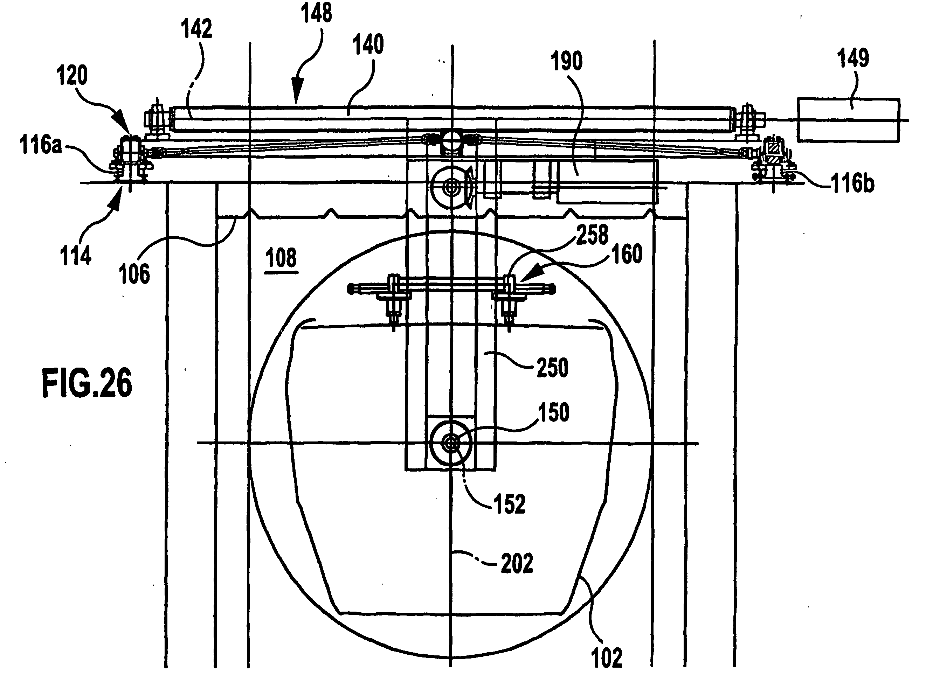

Auch bei dieser vierten Ausführungsform wird die Fahrzeugkarosserie 102 in das Tauchbad 108 eingetaucht, indem im Anfangsbereich des Tauchbads 108 eine Eindrehbewegung des Drehteils 148 um die Eindrehachse 142 um einen Winkel von 180° ausgeführt wird, um die Fahrzeugkarosserie 102 von der in den Fig. 23 und 24 dargestellten Standardstellung oberhalb des Tauchbads 108 in die in den Fig. 25 und 26 dargestellte Eintauchstellung zu bringen, in welcher die Fahrzeugkarosserie 102 vollständig in das Tauchbad 108 eingetaucht ist.

Nach dem Eintauchen der Fahrzeugkarosserie 102 in das Tauchbad 108 wird dieselbe durch Drehen des Halteteils 160 um die Drehachse 152 mittels der Drehantriebsvorrichtung 168 gedreht, um in Hohlräumen oder an nach unten gewandten Oberflächen der Fahrzeugkarosserie 102 haftende Luftblasen von der Fahrzeugkarosserie 102 zu entfernen.

Die Drehbewegung des Halteteils 160 um die Drehachse 152 kann dabei kontinuierlich oder intermittierend, unter Beibehaltung der anfänglichen Drehrichtung oder unter einmaliger oder mehrmaliger Umkehr der Drehrichtung erfolgen.

Vor dem Ausbringen der Fahrzeugkarosserie 102 aus dem Tauchbad 108 wird die Fahrzeugkarosserie 102 in die in Fig. 26 dargestellte Ausgangsstellung zurückgebracht, in welcher die vertikale Längsmittelebene 202 der Fahrzeugkarosserie 102 vertikal ausgerichtet ist.

Anschließend erfolgt das Ausbringen der Fahrzeugkarosserie 102 aus dem Tauchbad 108, indem im Endbereich des Tauchbads 108 der Drehteil 148 um einen Winkel von 180° um die Eindrehachse 142 gedreht wird, wodurch die Fahrzeugkarosserie 102 aus der Kopfüberstellung in dem Tauchbad 108 in die Standardstellung außerhalb des Tauchbades 108 überführt wird.

Die Drehbewegung des Halteteils 160 um die Drehachse 152 kann jedoch bereits vor Abschluß der Eindrehbewegung des Drehteils 148 beginnen und noch nach Beginn der Ausdrehbewegung des Drehteils 148 andauern.

Die Drehbewegung kann von dem Drehantriebsmotor 190 zu der Drehwelle 150 auch mittels anderer Übertragungsmittel, beispielsweise durch Kurbeltriebe, Antriebsketten, Zugseile oder ähnliches, übertragen werden.

Im übrigen stimmt die vierte Ausführungsform einer Vorrichtung 100 zur Oberflächenbehandlung von Fahrzeugkarosserien 102 mit der ersten Ausführungsform überein, auf deren vorstehende Beschreibung insoweit Bezug genommen wird.

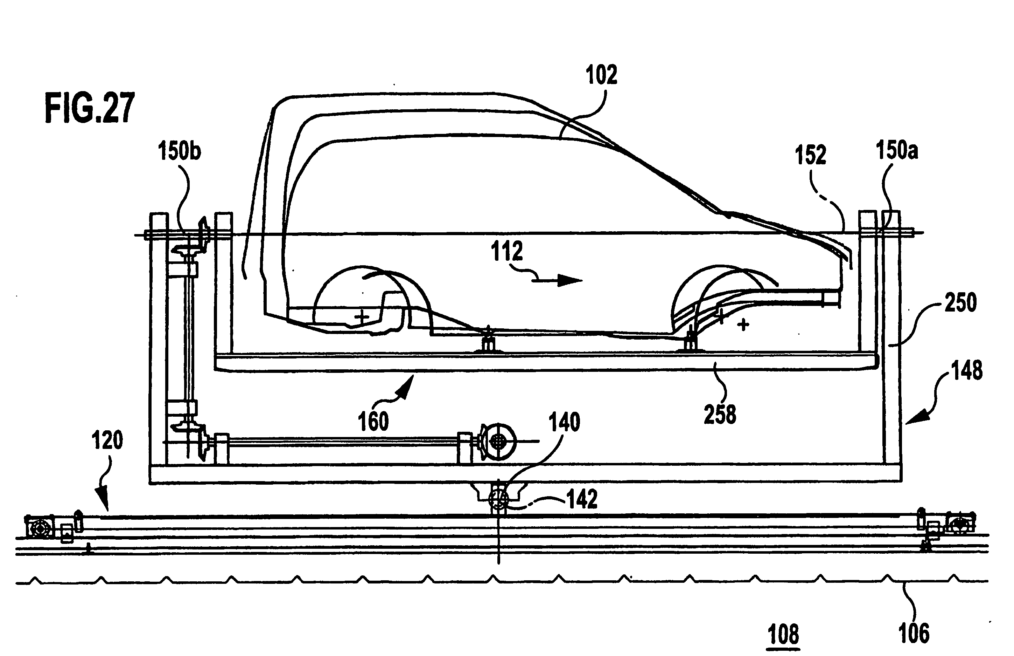

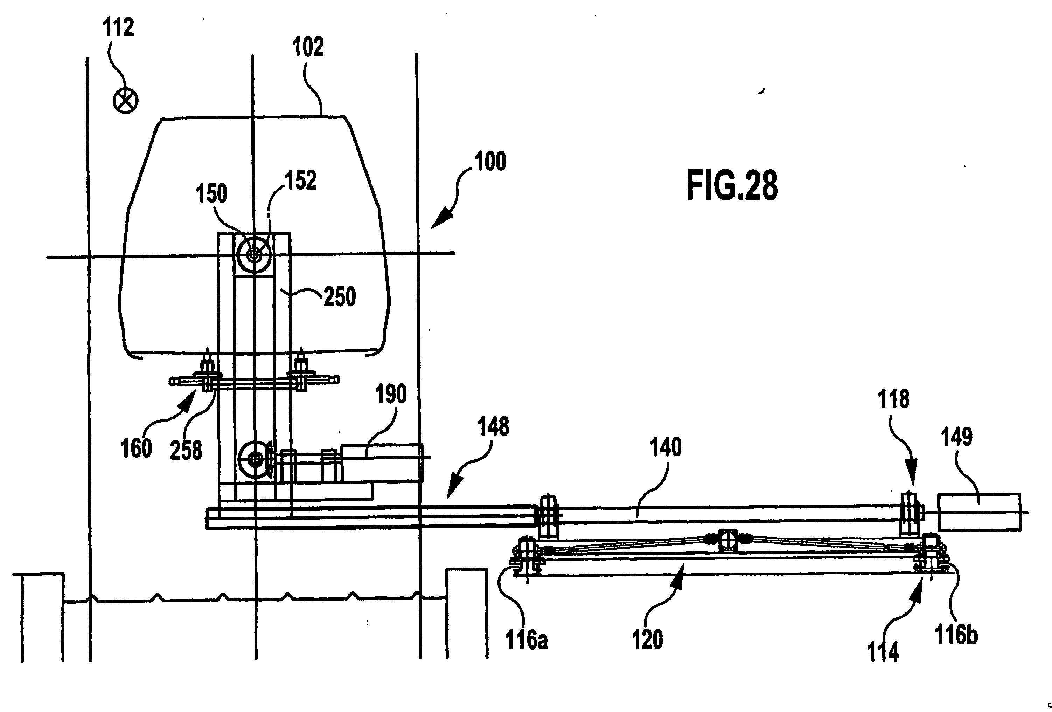

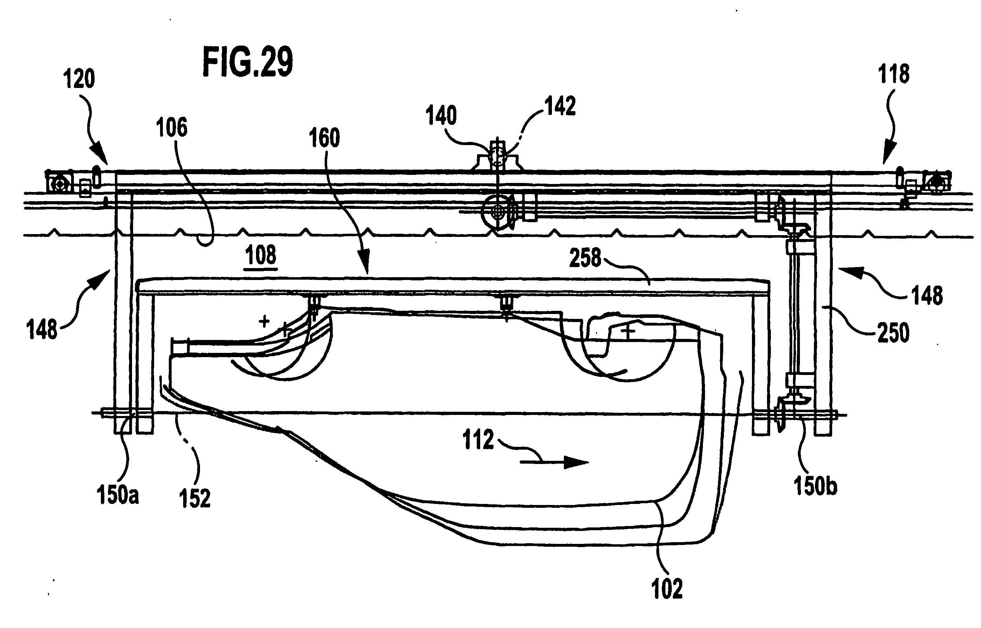

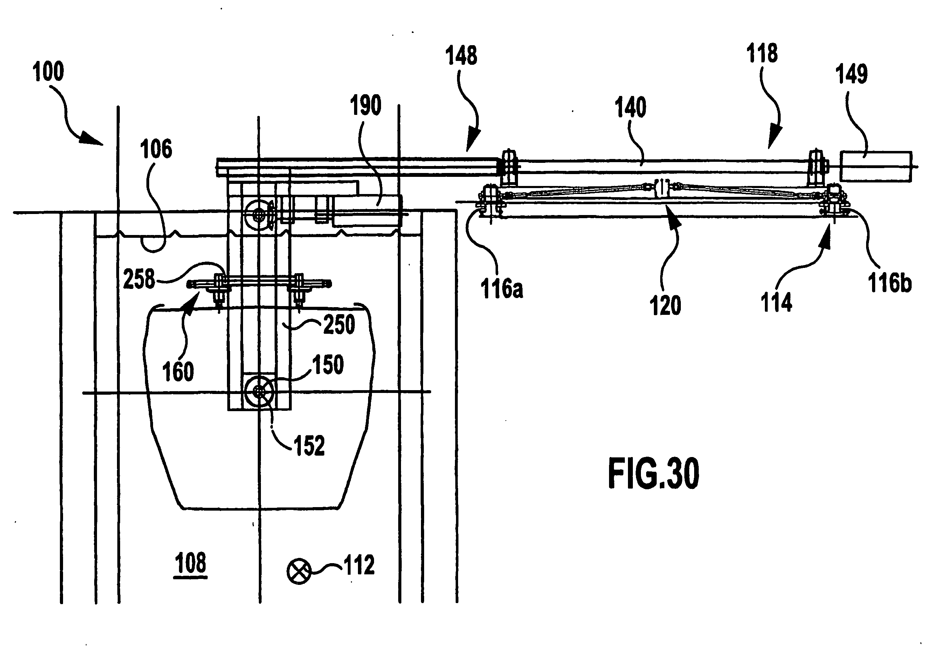

Eine in den Fig. 27 bis 30 dargestellte fünfte Ausführungsform einer Vorrichtung 100 zur Oberflächenbehandlung von Fahrzeugkarosserien 102 unterscheidet sich von der vorstehend beschriebenen vierten Ausführungsform lediglich dadurch, daß die Führungsschienen 116a, 116b der Führungseinrichtung 114 beide auf derselben Seite des Tauchbads 108 angeordnet sind und daß die Drehplattform 143 mit dem Drehgestell 250 über die Lagerböcke 138 der Eindrehwelle 140 hinaus vorsteht, so daß das Drehgestell 250 und die Fahrzeugkarosserie 102 in der in den Fig. 27 und 28 dargestellten Standardstellung der Fahrzeugkarosserie 102 über dem Tauchbad 108 angeordnet sind und in der in den Fig. 29 und 30 dargestellten Kopfüberstellung der Fahrzeugkarosserie 102 zumindest teilweise in das Tauchbad 108 eintauchen.

Die fünfte Ausführungsform verhält sich zu der vierten Ausführungsform also genauso wie die vorstehend beschriebene zweite Ausführungsform zu der ersten Ausführungsform einer Vorrichtung 100 zur Oberflächenbehandlung von Fahrzeugkarosserien 102.

Im übrigen stimmt die fünfte Ausführungsform einer Vorrichtung 100 zur Oberflächenbehandlung von Fahrzeugkarosserien 102 mit der vierten Ausführungsform überein, auf deren vorstehende Beschreibung insoweit Bezug genommen wird.

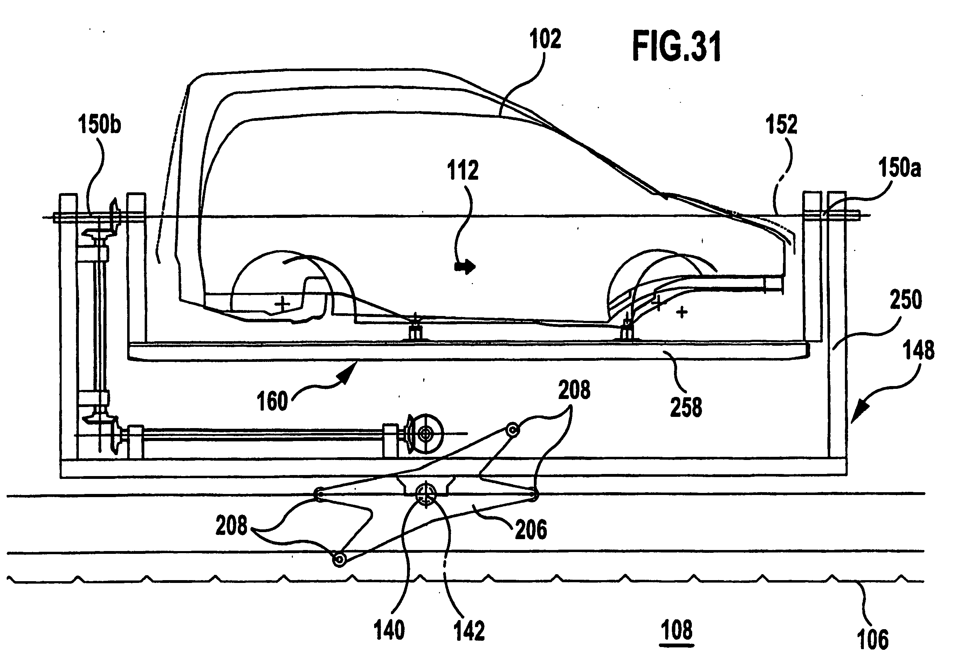

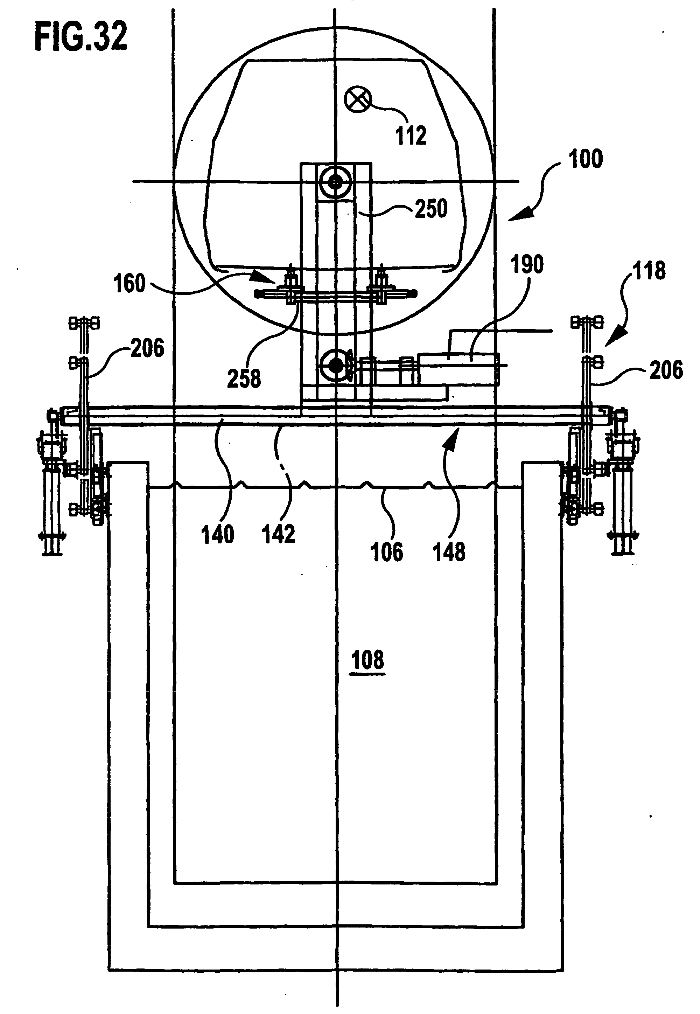

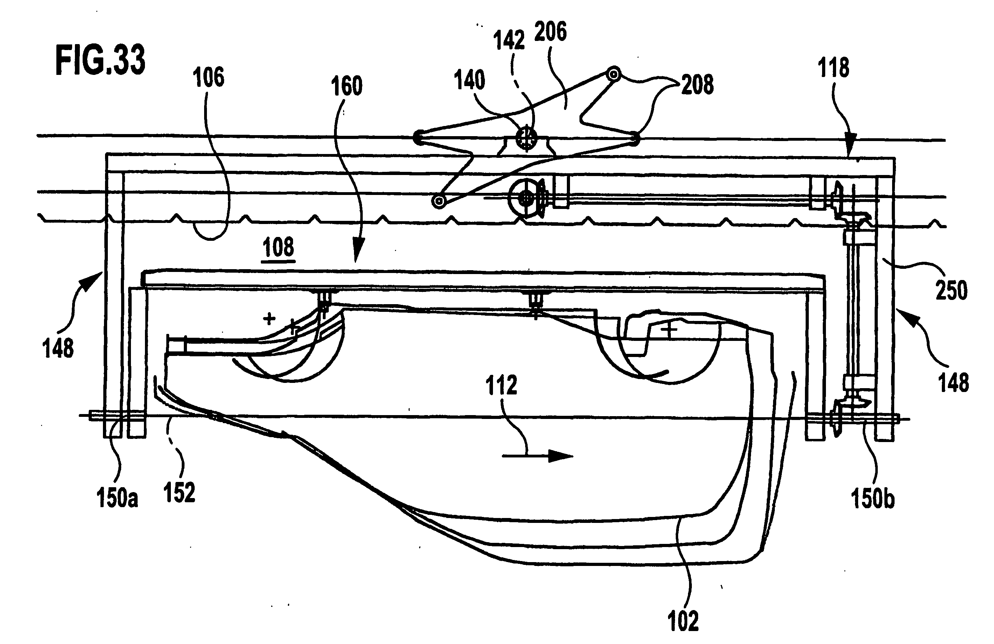

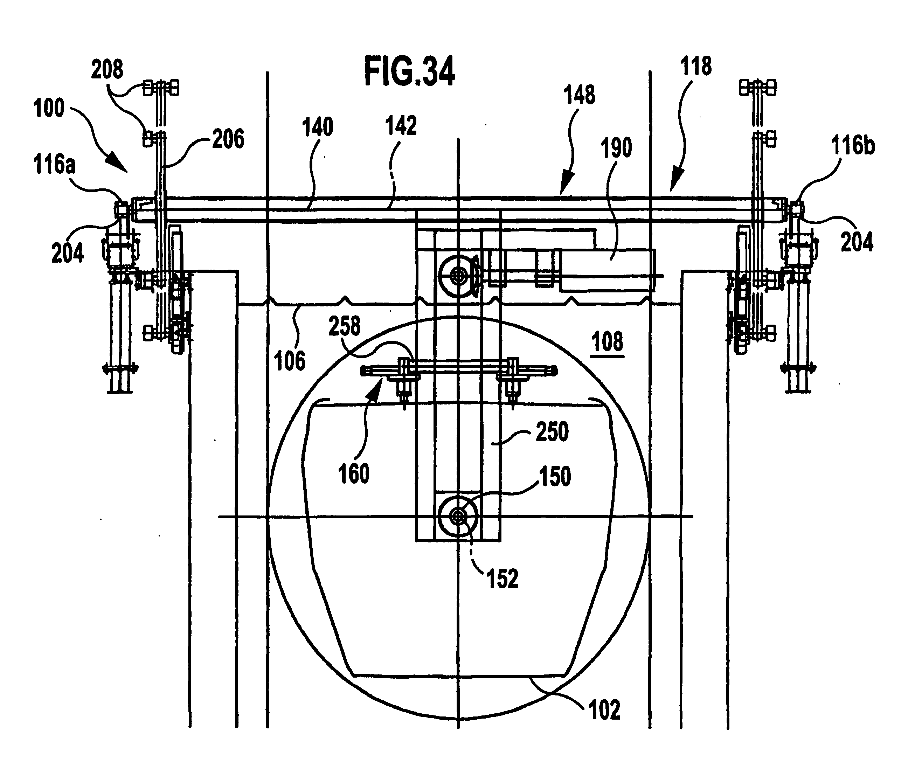

Eine in den Fig. 31 bis 34 dargestellte sechste Ausführungsform einer Vorrichtung 100 zur Oberflächenbehandlung von Fahrzeugkarosserien 102 unterscheidet sich von der vorstehend beschriebenen vierten Ausführungsform dadurch, daß, ebenso wie bei der vorstehend beschriebenen dritten Ausführungsform, die Halterungsgestelle 118 mittels Förderketten 204 längs der Tranlsationsrichtung 112 gefördert werden und daß die Eindrehbewegung und die Ausdrehbewegung des Drehteils 148 durch das Zusammenwirken von drehfest mit der Eindrehwelle 140 verbundenen Drehkreuzen 206 mit ortsfest angeordneten Leitschienen 209 der Fördervorrichtung 110 bewirkt wird, ohne daß an den Halterungsgestellen 118 jeweils ein Translationsantriebsmotor bzw. ein Eindrehantriebsmotor vorhanden sind.

Die sechste Ausführungsform verhält sich zu der vorstehend beschriebenen vierten Ausführungsform also genau so wie die vorstehend beschriebene dritte Ausführungsform zu der ersten Ausführungsform einer Vorrichtung 100 zur Oberflächenbehandlung von Fahrzeugkarosserien 102.

Im übrigen stimmt die sechste Ausführungsform einer Vorrichtung 100 zur Oberflächenbehandlung von Fahrzeugkarosserien 102 hinsichtlich Aufbau und Funktion mit der vierten Ausführungsform überein, auf deren vorstehende Beschreibung insoweit Bezug genommen wird.

Insbesondere wird die Drehbewegung des Halteteils 160 um die Drehachse 152 mittels eines an dem Drehteil 148 angeordneten, mitbewegten Drehantriebsmotors 190 angetrieben.

## Patentansprüche

1. Vorrichtung zur Oberflächenbehandlung von Werkstücken, insbesondere von Fahrzeugkarosserien (102), umfassend mindestens ein Tauchbad (108) und eine Fördervorrichtung (110) mit mehreren Halterungsgestellen (118), an denen jeweils ein Werkstück angeordnet ist, wobei die Fördervorrichtung (110) die Werkstücke vollständig in das Tauchbad (108) einbringt, im vollständig eingetauchten Zustand längs einer im wesentlichen horizontalen Translationsrichtung (112) durch das Tauchbad (108) hindurch fördert und aus dem Tauchbad (108) wieder ausbringt,
**dadurch gekennzeichnet,**
**daß** mittels der Fördervorrichtung (110) mindestens ein Werkstück im vollständig eingetauchten Zustand um eine Drehachse (152) gedreht wird, welche im wesentlichen parallel oder schräg zu der Translationsrichtung (112) ausgerichtet ist.

2. Vorrichtung nach Anspruch 1, **dadurch gekennzeichnet, daß** die Drehachse (152) im wesentlichen parallel zu der Translationsrichtung (112) ausgerichtet ist.

3. Vorrichtung nach einem der Ansprüche 1 oder 2, **dadurch gekennzeichnet, daß** das Werkstück im vollständig eingetauchten Zustand um mindestens 10°, vorzugsweise um mindestens 30°, aus seiner Ausgangsstellung um die Drehachse (152) gedreht wird.

4. Vorrichtung nach einem der Ansprüche 1 bis 3, **dadurch gekennzeichnet, daß** das Werkstück im vollständig eingetauchten Zustand um mindestens 360° aus seiner Ausgangsstellung um die Drehachse (152) gedreht wird.

5. Vorrichtung nach einem der Ansprüche 1 bis 4, **dadurch gekennzeichnet, daß** das Werkstück im vollständig eingetauchten Zustand in Drehstellungen gebracht wird, in denen das Werkstück gegenüber seiner Ausgangsstellung (längs der Translationsrichtung gesehen) im Uhrzeigersinn um die Drehachse (152) verdreht ist, und in Drehstellungen gebracht wird, in denen das Werkstück gegenüber seiner Ausgangsstellung (längs der Translationsrichtung gesehen) im Gegenuhrzeigersinn um die Drehachse (152) verdreht ist.

6. Vorrichtung nach einem der Ansprüche 1 bis 5, **dadurch gekennzeichnet, daß** das Werkstück eine Fahrzeugkarosserie (102) ist und daß die Drehachse (152) im wesentlichen parallel zur Längsachse der Fahrzeugkarosserie (102) ausgerichtet ist.

7. Vorrichtung nach einem der Ansprüche 1 bis 6, **dadurch gekennzeichnet, daß** das Werkstück um die Drehachse (152) gedreht wird, während es längs der Translationsrichtung (112) durch das Tauchbad (108) gefördert wird.

8. Vorrichtung nach einem der Ansprüche 1 bis 7, **dadurch gekennzeichnet, daß** das Werkstück während der Drehung um die Drehachse (152) von dem Badspiegel (106) des Tauchbads (108) stets einen Mindestabstand von mindestens 5 cm, vorzugsweise von mindestens 10 cm, einhält.

9. Vorrichtung nach einem der Ansprüche 1 bis 8, **dadurch gekennzeichnet, daß** die Fördervorrichtung (110) eine Bewegungsvorrichtung umfaßt, mittels welcher das Werkstück aus einer Stellung außerhalb des Tauchbads (108) in eine Stellung, in der das Werkstück vollständig in das Tauchbad (108) eingetaucht ist, überführbar ist.

10. Vorrichtung nach Anspruch 9, **dadurch gekennzeichnet, daß** die Bewegungsvorrichtung eine Eindrehvorrichtung umfaßt, mittels welcher das Werkstück um eine Eindrehachse (142) drehbar ist.

11. Vorrichtung nach Anspruch 10, **dadurch gekennzeichnet, daß** das Werkstück um einen Winkel von mindestens 180° um die Eindrehachse (142) drehbar ist.

12. Vorrichtung nach einem der Ansprüche 10 oder 11, **dadurch gekennzeichnet, daß** die Eindrehachse (142) quer, vorzugsweise im wesentlichen senkrecht, zu der Drehachse (152) ausgerichtet ist.

13. Vorrichtung nach einem der Ansprüche 9 bis 12, **dadurch gekennzeichnet, daß** das Werkstück eine Fahrzeugkarosserie (102) ist und daß das Werkstück mittels der Bewegungseinrichtung aus einer Standardstellung, in welcher Fensteröffnungen der Fahrzeugkarosserie (102) oberhalb einer Bodengruppe der Fahrzeugkarosserie (102) angeordnet sind, in eine Kopfüberstellung, in welcher die Fensteröffnungen der Fahrzeugkarosserie (102) unterhalb der Bodengruppe der Fahrzeugkarosserie (102) angeordnet sind, überführbar ist.

14. Vorrichtung nach einem der Ansprüche 1 bis 13, **dadurch gekennzeichnet, daß** mindestens ein Halterungsgestell (118) einen Basisteil (120) umfaßt, der an einer Führungseinrichtung (114) der Fördervorrichtung (110) geführt ist.

15. Vorrichtung nach Anspruch 14, **dadurch gekennzeichnet, daß** der Basisteil (120) mittels eines mit dem Basisteil (120) mitbewegten Translationsantriebs (128) längs der Führungseinrichtung (114) verfahrbar ist.

16. Vorrichtung nach einem der Ansprüche 14 oder 15, **dadurch gekennzeichnet, daß** mindestens ein Halterungsgestell (118) einen Drehteil (148) umfaßt, welcher um eine Eindrehachse (142) drehbar an dem Basisteil (120) gehalten ist.

17. Vorrichtung nach einem der Ansprüche 1 bis 13, **dadurch gekennzeichnet, daß** mindestens ein Halterungsgestell (118) einen Drehteil (148) umfaßt, welcher um eine Eindrehachse (142) drehbar mit einem kontinuierlichen Fördermittel (204) verbunden ist, wobei das Fördermittel (204) den Drehteil (148) längs der Translationsrichtung (112) fördert.

18. Vorrichtung nach einem der Ansprüche 13 bis 17, **dadurch gekennzeichnet, daß** mindestens ein Halterungsgestell (118) einen Halteteil (160) umfaßt, an welchem das Werkstück gehalten ist, wobei der Halteteil (160) relativ zu dem Drehteil (148) um die Drehachse (152) drehbar ist.

19. Vorrichtung nach einem der Ansprüche 1 bis 18, **dadurch gekennzeichnet, daß** mindestens ein Halterungsgestell (118) einen an dem Halterungsgestell (118) angeordneten Drehantriebsmotor (190) zum Antreiben der Drehbewegung des Werkstücks um die Drehachse (152) umfaßt.

20. Vorrichtung nach einem der Ansprüche 1 bis 19, **dadurch gekennzeichnet, daß** mindestens ein Halterungsgestell (118) eine Drehantriebsvorrichtung (246) zum Antreiben der Drehbewegung des Werkstücks um die Drehachse (152) umfaßt und daß die Fördervorrichtung (110) einen externen Drehantriebsmotor (210) umfaßt, der vor Beginn der Drehung des Werkstücks um die Drehachse (152) mit der Drehantriebseinrichtung (246) des jeweiligen Halterungsgestells (118) gekoppelt und nach Ende der Drehung des Werkstücks um die Drehachse (152) von der Drehantriebsvorrichtung (246) entkoppelt wird.

21. Vorrichtung nach Anspruch 20, **dadurch gekennzeichnet, daß** der externe Drehantriebsmotor (210) während der Drehung des Werkstücks um die Drehachse (152) längs der Translationsrichtung (112) des Halterungsgestells (118) bewegt wird.

22. Vorrichtung nach einem der Ansprüche 20 oder 21, **dadurch gekennzeichnet, daß** die Fördervorrichtung (110) eine Kopplungseinrichtung (192) zum Koppeln des externen Drehantriebsmotors (210) mit der Drehantriebsvorrichtung (246) umfaßt, welche eine Betätigungseinrichtung (234) zum Betätigen eines Kopplungsriegels (242) umfaßt.

23. Verfahren zur Oberflächenbehandlung von Werkstücken, insbesondere von Fahrzeugkarosserien (102), bei dem die Werkstücke, die an jeweils einem Halterungsgestell (118) angeordnet sind, mittels einer Fördervorrichtung (110) vollständig in mindestens ein Tauchbad (108) eingebracht werden, im vollständig eingetauchten Zustand längs einer im wesentlichen horizontalen Translationsrichtung (112) durch das Tauchbad (108) hindurch gefördert werden und aus dem Tauchbad (108) wieder ausgebracht werden, **dadurch gekennzeichnet, daß** mindestens ein Werkstück im vollständig eingetauchten Zustand um eine Drehachse gedreht wird, welche im wesentlichen parallel oder schräg zu der Translationsrichtung (112) ausgerichtet ist.

24. Verfahren nach Anspruch 23, **dadurch gekennzeichnet, daß** die Drehachse (152) im wesentlichen parallel zu der Translationsrichtung (112) ausgerichtet ist.

25. Verfahren nach einem der Ansprüche 23 oder 24, **dadurch gekennzeichnet, daß** das Werkstück im vollständig eingetauchten Zustand um mindestens 10° vorzugsweise um mindestens 30°, aus seiner Ausgangsstellung um die Drehachse (152) gedreht wird.

26. Verfahren nach einem der Ansprüche 23 bis 25, **dadurch gekennzeichnet, daß** das Werkstück im vollständig eingetauchten Zustand um mindestens 360° aus seiner Ausgangsstellung um die Drehachse (152) gedreht wird.

27. Verfahren nach einem der Ansprüche 23 bis 26, **dadurch gekennzeichnet, daß** das Werkstück im vollständig eingetauchten Zustand in Drehstellungen gebracht wird, in denen das Werkstück gegenüber seiner Ausgangsstellung (längs der Transportrichtung gesehen) im Uhrzeigersinn um die Drehachse (152) verdreht ist, und in Drehstellung gebracht wird, in denen das Werkstück gegenüber seiner Ausgangsstellung (längs der Transportrichtung gesehen) im Gegenuhrzeigersinn um die Drehachse (152) verdreht ist.

28. Verfahren nach einem der Ansprüche 23 bis 27, **dadurch gekennzeichnet, daß** das Werkstück eine Fahrzeugkarosserie ist und daß die Drehachse im wesentlichen parallel zur Längsachse der Fahrzeugkarosserie (102) ausgerichtet ist.

29. Verfahren nach einem der Ansprüche 23 bis 28, **dadurch gekennzeichnet, daß** das Werkstück um die Drehachse (152) gedreht wird, während es längs der Translationsrichtung (112) durch das Tauchbad (108) gefördert wird.

30. Verfahren nach einem der Ansprüche 23 bis 29, **dadurch gekennzeichnet, daß** das Werkstück während der Drehung um die Drehachse (152) von dem Badspiegel (106) des Tauchbads (108) stets einen Mindestabstand von mindestens 5 cm, vorzugsweise von mindestens 10 cm, einhält.

31. Verfahren nach einem der Ansprüche 23 bis 30, **dadurch gekennzeichnet, daß** die Fördervorrichtung (110) eine Bewegungsvorrichtung umfaßt, mittels welcher das Werkstück aus einer Stellung außerhalb des Tauchbads (108) in eine Stellung, in der das Werkstück vollständig in das Tauchbad (108) eingetaucht ist, überführbar ist.

32. Verfahren nach Anspruch 31, **dadurch gekennzeichnet, daß** die Bewegungsvorrichtung eine Eindrehvorrichtung umfaßt, mittels welcher das Werkstück um eine Eindrehachse (142) gedreht wird.

33. Verfahren nach Anspruch 32, **dadurch gekennzeichnet, daß** das Werkstück um einen Winkel von mindestens 180° um die Eindrehachse (142) gedreht wird.

34. Verfahren nach einem der Ansprüche 32 oder 33, **dadurch gekennzeichnet, daß** die Eindrehachse (142) quer, vorzugsweise im wesentlichen senkrecht, zu der Drehachse (152) ausgerichtet ist.

35. Verfahren nach einem der Ansprüche 31 bis 34, **dadurch gekennzeichnet, daß** das Werkstück eine Fahrzeugkarosserie (102) ist und daß das Werkstück mittels der Bewegungsvorrichtung aus einer Standardstellung, in welcher Fensteröffnungen der Fahrzeugkarosserie (102) oberhalb einer Bodengruppe der Fahrzeugkarosserie (102) angeordnet sind, in eine Kopfüberstellung, in welcher die Fensteröffnungen der Fahrzeugkarosserie (102) unterhalb der Bodengruppe der Fahrzeugkarosserie (102) angeordnet sind, überführt wird.

36. Verfahren nach einem der Ansprüche 23 bis 35, **dadurch gekennzeichnet, daß** mindestens ein Halterungsgestell (118) einen Basisteil (120) umfaßt, der an einer Führungseinrichtung (114) der Fördervorrichtung (110) geführt wird.

37. Verfahren nach Anspruch 36, **dadurch gekennzeichnet, daß** der Basisteil (120) mittels eines mit dem Basisteil (120) mitbewegten Translationsantriebs (128) längs der Führungseinrichtung (114) verfahren wird.

38. Verfahren nach einem der Ansprüche 36 oder 37, **dadurch gekennzeichnet, daß** mindestens ein Halterungsgestell (118) einen Drehteil (148) umfaßt, welcher um eine Eindrehachse (142) drehbar an dem Basisteil (120) gehalten ist.

39. Verfahren nach einem der Ansprüche 23 bis 38, **dadurch gekennzeichnet, daß** mindestens ein Halterungsgestell (118) einen Drehteil (148) umfaßt, welcher um eine Eindrehachse (142) drehbar an einem kontinuierlichen Fördermittel (204) gehalten ist und mittels des kontinuierlichen Fördermittels (204) längs der Translationsrichtung (112) gefördert wird.

40. Verfahren nach einem der Ansprüche 38 oder 39, **dadurch gekennzeichnet, daß** mindestens ein Halterungsgestell (118) einen Halteteil (160) umfaßt, an welchem das Werkstück gehalten ist, wobei der Halteteil (160) relativ zu dem Drehteil (148) um die Drehachse (152) drehbar ist.

41. Verfahren nach einem der Ansprüche 23 bis 40, **dadurch gekennzeichnet, daß** mindestens ein Halterungsgestell (118) einen an dem Halterungsgestell (118) angeordneten Drehantriebsmotor (190) zum Antreiben der Drehbewegung des Werkstücks um die Drehachse (152) umfaßt.

42. Verfahren nach einem der Ansprüche 23 bis 41, **dadurch gekennzeichnet, daß** mindestens ein Halterungsgestell (118) eine Drehantriebsvorrichtung (246) zum Antreiben der Drehbewegung des Werkstücks um die Drehachse (152) umfaßt und daß die Fördervorrichtung (110) einen externen Drehantriebsmotor (210) umfaßt, der vor Beginn der Drehung des Werkstücks um die Drehachse (152) mit der Drehantriebsvorrichtung (246) des jeweiligen Halterungsgestells (118) gekoppelt und nach Ende der Drehung des Werkstücks um die Drehachse (152) von der Drehantriebsvorrichtung (246) entkoppelt wird.

43. Verfahren nach Anspruch 42, **dadurch gekennzeichnet, daß** der externe Drehantriebsmotor (210) während der Drehung des Werkstücks um die Drehachse (152) längs der Translationsrichtung (112) des Halterungsgestells (118) bewegt wird.

44. Verfahren nach einem der Ansprüche 42 oder 43, **dadurch gekennzeichnet, daß** die Fördervorrichtung (110) eine Kopplungseinrichtung (192) zum Koppeln des externen Drehantriebsmotors (210) mit der Drehantriebsvorrichtung (246) umfaßt, wobei die Kopplung des externen Drehantriebsmotors (210) an die Drehantriebsvorrichtung (246) mittels eines Kopplungsriegels (242) erfolgt, der mittels einer Betätigungseinrichtung (234) betätigt wird.

## Claims

1. A device for the surface treatment of work pieces, and in particular of vehicle bodies (102), comprising at least one dip tank (108) and a conveyor device (110) incorporating a plurality of mounting racks (118) on which a respective work piece is arranged, wherein the conveyor device (110) moves the work pieces entirely into the dip tank (108), conveys them in a substantially horizontal direction of translation (112) through the dip tank (108) in the fully immersed state and removes them from the dip tank (108),
**characterised**
**in that** at least one work piece is rotated in the fully immersed state by means of the conveyor device (110) about an axis of rotation (152) which is aligned substantially in parallel with or inclined to the direction of translation (112).

2. A device in accordance with Claim 1, **characterised in that** the axis of rotation (152) is aligned substantially parallel to the direction of translation (112).

3. A device in accordance with either of Claims 1 or 2, **characterised in that** the work piece is rotated in the fully immersed state about the axis of rotation (152) through at least 10°, preferably through at least 30°, from its starting position.

4. A device in accordance with any of the Claims 1 to 3, **characterised in that** the work piece is rotated in the fully immersed state about the axis of rotation (152) through at least 360° from its starting position.

5. A device in accordance with any of the Claims 1 to 4, **characterised in that** the work piece is moved in the fully immersed state into rotational positions in which the work piece has been rotated about the axis of rotation (152) in a clockwise direction relative to its starting position (as seen in the direction of translation), and is moved into rotational positions in which the work piece has been rotated about the axis of rotation (152) in a counter clockwise direction relative to its starting position (as seen in the direction of translation).

6. A device in accordance with any of the Claims 1 to 5, **characterised in that** the work piece is a vehicle body (102) and **in that** the axis of rotation (152) is aligned substantially parallel to the longitudinal axis of the vehicle body (102).

7. A device in accordance with any of the Claims 1 to 6, **characterised in that** the work piece is rotated about the axis of rotation (152) whilst it is being conveyed through the dip tank (108) in the direction of translation (112).

8. A device in accordance with any of the Claims 1 to 7, **characterised in that** the work piece always maintains a minimum distance of at least 5 cm, preferably of at least 10 cm, from the liquid level (106) of the dip tank (108) during the rotation thereof about the axis of rotation (152).

9. A device in accordance with any of the Claims 1 to 8, **characterised in that** the conveyor device (110) comprises a moving device by means of which the work piece is transferable from a position outside the dip tank (108) into a position in which the work piece is fully immersed in the dip tank (108).

10. A device in accordance with Claim 9, **characterised in that** the moving device comprises a pivoting device by means of which the work piece is rotatable about a pivotal axis (142).

11. A device in accordance with Claim 10, **characterised in that** the work piece is rotatable about the pivotal axis (142) through an angle of at least 180°.

12. A device in accordance with either of the Claims 10 or 11, **characterised in that** the pivotal axis (142) is aligned transversely, preferably substantially perpendicularly, with respect to the axis of rotation (152).

13. A device in accordance with any of the Claims 9 to 12, **characterised in that** the work piece is a vehicle body (102) and **in that** the work piece is transferable by means of the moving device from a standard position, in which window openings of the vehicle body (102) are arranged above a floor pan of the vehicle body (102), into a head first position in which the window openings of the vehicle body (102) are arranged below the floor pan of the vehicle body (102).

14. A device in accordance with any of the Claims 1 to 13, **characterised in that** at least one mounting rack (118) comprises a base member (120) which is guided on a guidance mechanism (114) of the conveyor device (110).

15. A device in accordance with Claim 14, **characterised in that** the base member (120) is displaceable along the guidance mechanism (114) by means of a translatory drive (128) moving with the base member (120).

16. A device in accordance with either of the Claims 14 or 15, **characterised in that** at least one mounting rack (118) comprises a rotary member (148) which is held on the base member (120) such as to be rotatable about a pivotal axis (142).

17. A device in accordance with any of the Claims 1 to 13, **characterised in that** at least one mounting rack (118) comprises a rotary member (148) which is connected to a continuous conveying means (204) such as to be rotatable about a pivotal axis (142), wherein the conveying means (204) advances the rotary member (148) in the direction of translation (112).

18. A device in accordance with any of the Claims 13 to 17, **characterised in that** at least one mounting rack (118) comprises a retaining member (160) on which the work piece is held, wherein the retaining member (160) is rotatable relative to the rotary member (148) about the axis of rotation (152).

19. A device in accordance with any of the Claims 1 to 18, **characterised in that** at least one mounting rack (118) comprises a rotary drive motor (190) arranged on the mounting rack (118) for producing the rotary motion of the work piece about the axis of rotation (152).

20. A device in accordance with any of the Claims 1 to 19, **characterised in that** at least one mounting rack (118) comprises a rotary drive device (246) for producing the rotary motion of the work piece about the axis of rotation (152) and **in that** the conveyor device (110) comprises an external rotary drive motor (210) which is coupled to the rotary drive mechanism (246) of the respective mounting rack (118) before beginning the process of rotating the work piece about the axis of rotation (152) and is uncoupled from the rotary drive device (246) after ending the rotation of the work piece about the axis of rotation (152).

21. A device in accordance with Claim 20, **characterised in that** the external rotary drive motor (210) is moved in the direction of translation (112) of the mounting rack (118) during the rotation of the work piece about the axis of rotation (152).

22. A device in accordance with either of the Claims 20 or 21, **characterised in that** the conveyor device (110) comprises a coupling mechanism (192) for coupling the external rotary drive motor (210) to the rotary drive device (246) which comprises an actuating mechanism (234) for actuating a coupling locking means (242).

23. A method for the surface treatment of work pieces, and in particular of vehicle bodies (102), wherein the work pieces are arranged on a respective mounting rack (118) and are moved by means of a conveyor device (110) in their entirety into at least one dip tank (108), and are conveyed in the fully immersed state in a substantially horizontal direction of translation (112) through the dip tank (108) and then removed from the dip tank (108), **characterised in that** at least one work piece is rotated in the fully immersed state about an axis of rotation which is aligned substantially in parallel with or inclined to the direction of translation (112).

24. A method in accordance with Claim 23, **characterised in that** the axis of rotation (152) is aligned substantially parallel to the direction of translation (112).

25. A method in accordance with either of the Claims 23 or 24, **characterised in that** the work piece is rotated in the fully immersed state about the axis of rotation (152) through at least 10°, preferably through at least 30°, from its starting position.

26. A method in accordance with any of the Claims 23 to 25, **characterised in that** the work piece is rotated in the fully immersed state about the axis of rotation (152) through at least 360° from its starting position.

27. A method in accordance with any of the Claims 23 to 26, **characterised in that** the work piece is moved in the fully immersed state into rotational positions in which the work piece has been rotated about the axis of rotation (152) in a clockwise direction relative to its starting position (as seen in the direction of translation), and is moved into rotational positions in which the work piece has been rotated about the axis of rotation (152) in a counter clockwise direction relative to its starting position (as seen in the direction of translation).

28. A method in accordance with any of the Claims 23 to 27, **characterised in that** the work piece is a vehicle body and
**in that** the axis of rotation is aligned substantially parallel to the longitudinal axis of the vehicle body (102).

29. A method in accordance with any of the Claims 23 to 28, **characterised in that** the work piece is rotated about the axis of rotation (152) whilst it is being conveyed through the dip tank (108) in the direction of translation (112).

30. A method in accordance with any of the Claims 23 to 29, **characterised in that** the work piece always maintains a minimum distance of at least 5 cm, preferably of at least 10 cm, from the liquid level (106) of the dip tank (108) during the rotation thereof about the axis of rotation (152).

31. A method in accordance with any of the Claims 23 to 30, **characterised in that** the conveyor device (110) comprises a moving device by means of which the work piece is transferable from a position outside the dip tank (108) into a position in which the work piece is fully immersed in the dip tank (108).

32. A method in accordance with Claim 31, **characterised in that** the moving device comprises a pivoting device by means of which the work piece is rotated about a pivotal axis (142).

33. A method in accordance with Claim 32, **characterised in that** the work piece is rotated about the pivotal axis (142) through an angle of at least 180°.

34. A method in accordance with either of the Claims 32 or 33, **characterised in that** the pivotal axis (142) is aligned transversely, preferably substantially perpendicularly, to the axis of rotation (152).

35. A method in accordance with any of the Claims 31 to 34, **characterised in that** the work piece is a vehicle body (102) and **in that** the work piece is transferred by means of the moving device from a standard position, in which window openings of the vehicle body (102) are arranged above a floor pan of the vehicle body (102), into a head first position in which the window openings of the vehicle body (102) are arranged below the floor pan of the vehicle body (102).

36. A method in accordance with any of the Claims 23 to 35, **characterised in that** at least one mounting rack (118) comprises a base member (120) which is guided on a guidance mechanism (114) of the conveyor device (110).

37. A method in accordance with Claim 36, **characterised in that** the base member (120) is displaceable along the guidance mechanism (114) by means of a translatory drive (128) moving with the base member (120).

38. A method in accordance with either of the Claims 36 or 37, **characterised in that** at least one mounting rack (118) comprises a rotary member (148) which is held on the base member (120) such as to be rotatable about a pivotal axis (142).

39. A method in accordance with any of the Claims 23 to 38, **characterised in that** at least one mounting rack (118) comprises a rotary member (148) which is held on a continuous conveying means (204) such as to be rotatable about a pivotal axis (142) and is advanced in the direction of translation (112) by said conveying means (204).

40. A method in accordance with either of the Claims 38 or 39, **characterised in that** at least one mounting rack (118) comprises a retaining member (160) on which the work piece is held, wherein the retaining member (160) is rotatable relative to the rotary member (148) about the axis of rotation (152).

41. A method in accordance with any of the Claims 23 to 40, **characterised in that** at least one mounting rack (118) comprises a rotary drive motor (190) arranged on the mounting rack (118) for producing the rotary motion of the work piece about the axis of rotation (152).

42. A method in accordance with any of the Claims 23 to 41, **characterised in that** at least one mounting rack (118) comprises a rotary drive device (246) for producing the rotary motion of the work piece about the axis of rotation (152) and **in that** the conveyor device (110) comprises an external rotary drive motor (210) which is coupled to the rotary drive device (246) of the respective mounting rack (118) before beginning the process of rotating the work piece about the axis of rotation (152) and is uncoupled from the rotary drive device (246) after ending the rotation of the work piece about the axis of rotation (152).

43. A method in accordance with Claim 42, **characterised in that** the external rotary drive motor (210) is moved in the direction of translation (112) of the mounting rack (118) during the rotation of the work piece about the axis of rotation (152).

44. A method in accordance with either of the Claims 42 or 43, **characterised in that** the conveyor device (110) comprises a coupling mechanism (192) for coupling the external rotary drive motor (210) to the rotary drive device (246), wherein the coupling of the external rotary drive motor (210) to the rotary drive device (246) is effected by means of a coupling locking means (242) which is actuated by means of an actuating mechanism (234).

## Revendications

1. Dispositif de traitement de surface de pièces, en particulier de carrosseries (102) de véhicules, comprenant au moins un bain d'immersion (108) et un dispositif de transport (110) avec plusieurs châssis de fixation (118), sur lesquels est placée respectivement une pièce, le dispositif de transport (110) déposant les pièces entièrement dans le bain d'immersion (108), les transportant à l'état entièrement immergé le long d'une direction de translation (112) essentiellement horizontale dans le bain d'immersion (108), et les ressortant à nouveau du bain d'immersion (108), **caractérisé en ce que**, au moyen du dispositif de transport (110) au moins une pièce est pivotée à l'état entièrement immergé autour d'un axe de rotation (152), lequel est orienté essentiellement parallèlement ou en biais par rapport à la direction de translation (112).

2. Dispositif selon la revendication 1, **caractérisé en ce que** l'axe de rotation (152) est orienté essentiellement parallèlement à la direction de translation (112).

3. Dispositif selon une des revendications 1 ou 2, **caractérisé en ce que** la pièce est pivotée à l'état entièrement immergé au moins de 10°, de préférence au moins de 30°, depuis sa position de départ autour de l'axe de rotation (152).

4. Dispositif selon une des revendications 1 à 3, **caractérisé en ce que** la pièce est pivotée à l'état entièrement immergé au moins de 360° depuis sa position de départ autour de l'axe de rotation (152).

5. Dispositif selon une des revendications 1 à 4, **caractérisé en ce que** la pièce à l'état entièrement immergé est amenée dans des positions de rotation, dans lesquelles la pièce est pivotée par rapport à sa position de départ (vue le long de la direction de translation) dans le sens horaire autour de l'axe de rotation (152), et amenée dans des positions de rotation, dans lesquelles la pièce est pivotée par rapport à sa position de départ (vue le long de la direction de translation) dans le sens horaire inverse autour de l'axe de rotation (152).

6. Dispositif selon une des revendications 1 à 5, **caractérisé en ce que** la pièce est une carrosserie (102) de véhicule, et **en ce que** l'axe de rotation (152) est orienté essentiellement parallèlement à l'axe longitudinal de la carrosserie (102) de véhicule.

7. Dispositif selon une des revendications 1 à 6, **caractérisé en ce que** la pièce est pivotée autour de l'axe de rotation (152), tandis qu'elle est transportée le long de la direction de translation (112) dans le bain d'immersion (108).

8. Dispositif selon une des revendications 1 à 7, **caractérisé en ce que** la pièce pendant la rotation autour de l'axe de rotation (152) respecte toujours une distance minimale avec le niveau (106) du bain d'immersion d'au moins 5 cm, de préférence au moins 10 cm.

9. Dispositif selon une des revendications 1 à 8, **caractérisé en ce que** le dispositif de transport (110) comprend un dispositif de mouvement au moyen duquel la pièce peut passer d'une position en dehors du bain d'immersion (108) à une position dans laquelle la pièce est complètement immergée dans le bain d'immersion (108).

10. Dispositif selon la revendication 9, **caractérisé en ce que** le dispositif de mouvement comprend un dispositif de basculement au moyen duquel la pièce est rotative autour d'un axe de basculement (142).

11. Dispositif selon la revendication 10, **caractérisé en ce que** la pièce peut basculer selon un angle d'au moins 180° autour de l'axe de basculement (142).

12. Dispositif selon une des revendications 10 ou 11, **caractérisé en ce que** l'axe de basculement (142) est orienté transversalement, de préférence essentiellement perpendiculairement, à l'axe de rotation (152).

13. Dispositif selon une des revendications 9 à 12, **caractérisé en ce que** la pièce est une carrosserie (102) de véhicule, et **en ce que** la pièce peut passer au moyen du dispositif de mouvement d'une position standard, dans laquelle les ouvertures des fenêtres de la carrosserie (102) de véhicule sont disposées au-dessus d'un bas de caisse de la carrosserie (102) de véhicule, à une position inversée dans laquelle les ouvertures de fenêtres de la carrosserie (102) de véhicule sont disposées en dessous du bas de caisse de la carrosserie de véhicule (102).

14. Dispositif selon une des revendications 1 à 13, **caractérisé en ce que** au moins un châssis de fixation (118) comprend une partie de base (120) qui est dirigée contre une installation de guidage (114) du dispositif de transport (110).

15. Dispositif selon la revendication 14, **caractérisé en ce que** la partie de base (120) est déplaçable au moyen d'un entraînement de translation (128) déplacé conjointement avec la partie de base (120) le long de l'installation de guidage (114).

16. Dispositif selon une des revendications 14 ou 15, **caractérisé en ce que** au moins un châssis de fixation (118) comprend une partie rotative (148) qui est maintenue, autour d'un axe de basculement (142), rotative contre la partie de base (120).

17. Dispositif selon une des revendications 1 à 13, **caractérisé en ce que** au moins un châssis de fixation (118) comprend une partie rotative (148), laquelle est reliée autour d'un axe de basculement (142) de façon rotative à un moyen de transport (204) continu, le moyen de transport (204) transportant la partie rotative (148) le long de la direction de translation (112).

18. Dispositif selon une des revendications 13 à 17, **caractérisé en ce que** au moins un châssis de fixation (118) comprend une pièce de retenue (160) contre laquelle est maintenue la pièce, la pièce de retenue (160) étant rotative par rapport à la partie rotative (148) autour de l'axe de rotation (152).

19. Dispositif selon une des revendications 1 à 18, **caractérisé en ce que** au moins un châssis de fixation (118) comprend un moteur d'entraînement en rotation (190) disposé sur le châssis de fixation (118) pour l'entraînement du mouvement de rotation de la pièce autour de l'axe de rotation (152).

20. Dispositif selon une des revendications 1 à 19, **caractérisé en ce que** au moins un châssis de fixation (118) comprend un dispositif d'entraînement en rotation (246) pour l'entraînement du mouvement de rotation de la pièce autour de l'axe de rotation (152), et **en ce que** le dispositif de transport (110) comprend un moteur d'entraînement en rotation externe (210) qui est couplé avant le début de la rotation de la pièce autour de l'axe de rotation (152) au dispositif d'entraînement en rotation (246) de chaque châssis de fixation (118), et qui est découplé du dispositif d'entraînement en rotation (246) à la fin de la rotation de la pièce autour de l'axe de rotation (152).

21. Dispositif selon la revendication 20, **caractérisé en ce que** le moteur d'entraînement en rotation externe (210) est déplacé pendant la rotation de la pièce autour de l'axe de rotation (152) le long de la direction de translation (112) du châssis de fixation (118).

22. Dispositif selon une des revendications 20 ou 21, **caractérisé en ce que** le dispositif de transport (110) comprend un système d'accouplement (192) pour l'accouplement du moteur d'entraînement en rotation externe (210) avec le dispositif d'entraînement en rotation (246), lequel comprend une installation de commande (234) pour la commande d'une barre d'accouplement (242).

23. Procédé de traitement de surface de pièces, en particulier de carrosseries de véhicules (102), dans lequel les pièces qui sont disposées respectivement sur un châssis de fixation (118), sont déposées au moyen d'un dispositif de transport (110) entièrement dans au moins un bain d'immersion (108), sont transportées à l'état entièrement immergé le long d'une direction de translation (112) essentiellement horizontale dans le bain d'immersion (108) et ressorties du bain d'immersion (108), **caractérisé en ce que** au moins une pièce à l'état entièrement immergé est pivotée autour d'un axe de rotation, qui est orientée essentiellement parallèlement ou en biais par rapport à la direction de translation (112).

24. Procédé selon la revendication 23, **caractérisé en ce que** l'axe de rotation (152) est orienté essentiellement parallèlement à la direction de translation (112).

25. Procédé selon une des revendications 23 ou 24, **caractérisé en ce que** la pièce est pivotée à l'état entièrement immergé au moins de 10°, de préférence au moins de 30°, depuis sa position de départ autour de l'axe de rotation (152).

26. Procédé selon une des revendications 23 à 25, **caractérisé en ce que** la pièce est pivotée à l'état entièrement immergé au moins de 360° depuis sa position de départ autour de l'axe de rotation (152).

27. Procédé selon une des revendications 23 à 26, **caractérisé en ce que** la pièce à l'état entièrement immergé est amenée dans des positions de rotation, dans lesquelles la pièce est pivotée par rapport à sa position de départ (vue le long de la direction de translation) dans le sens horaire autour de l'axe de rotation (152), et amenée dans des positions de rotation, dans lesquelles la pièce est pivotée par rapport à sa position de départ (vue le long de la direction de translation) dans le sens horaire inverse autour de l'axe de rotation (152).

28. Procédé selon une des revendications 23 à 27, **caractérisé en ce que** la pièce est une carrosserie de véhicule, et **en ce que** l'axe de rotation est orienté essentiellement parallèlement à l'axe longitudinal de la carrosserie (102) de véhicule.

29. Procédé selon une des revendications 23 à 28, **caractérisé en ce que** la pièce est pivotée autour de l'axe de rotation (152), tandis qu'elle est transportée le long de la direction de translation (112) dans le bain d'immersion (108).

30. Procédé selon une des revendications 23 à 29, **caractérisé en ce que** la pièce pendant la rotation autour de l'axe de rotation (152) respecte toujours une distance minimale avec le niveau (106) du bain d'immersion (108) d'au moins 5 cm, de préférence au moins 10 cm.

31. Procédé selon une des revendications 23 à 30, **caractérisé en ce que** le dispositif de transport (110) comprend un dispositif de mouvement au moyen duquel la pièce peut passer d'une position en dehors du bain d'immersion (108) à une position dans laquelle la pièce est complètement immergée dans le bain d'immersion (108).

32. Procédé selon la revendication 31, **caractérisé en ce que** le dispositif de mouvement comprend un dispositif de basculement au moyen duquel la pièce est rotative autour d'un axe de basculement (142).

33. Procédé selon la revendication 32, **caractérisé en ce que** la pièce est rotative selon un angle d'au moins 180° autour de l'axe de basculement (142).

34. Procédé selon une des revendications 32 ou 33, **caractérisé en ce que** l'axe de basculement (142) est orienté transversalement, de préférence essentiellement perpendiculairement, à l'axe de rotation (152).

35. Procédé selon une des revendications 31 à 34, **caractérisé en ce que** la pièce est une carrosserie (102) de véhicule, et **en ce que** la pièce peut passer au moyen du dispositif de mouvement d'une position standard, dans laquelle les ouvertures des fenêtres de la carrosserie (102) de véhicule sont disposées au-dessus d'un bas de caisse de la carrosserie (102) de véhicule, à une position inversée dans laquelle les ouvertures de fenêtres de la carrosserie (102) de véhicule sont disposées en dessous du bas de caisse de la carrosserie de véhicule (102).

36. Procédé selon une des revendications 23 à 35, **caractérisé en ce que** au moins un châssis de fixation (118) comprend une partie de base (120) qui est dirigée contre une installation de guidage (114) du dispositif de transport (110).

37. Procédé selon la revendication 36, **caractérisé en ce que** la partie de base (120) est déplacée au moyen d'un entraînement de translation (128) déplacé conjointement avec la partie de base (120) le long de l'installation de guidage (114).

38. Procédé selon une des revendications 36 ou 37, **caractérisé en ce que** au moins un châssis de fixation (118) comprend une partie rotative (148) qui est maintenue, autour d'un axe de basculement (142), rotative contre la partie de base (120).

39. Procédé selon une des revendications 23 à 38, **caractérisé en ce que** au moins un châssis de fixation (118) comprend une partie rotative (148), laquelle est maintenue autour d'un axe de basculement (142) de façon rotative sur un moyen de transport (204) continu, et est transportée au moyen du moyen de transport (204) continu le long de la direction de translation (112).

40. Procédé selon une des revendications 38 à 39, **caractérisé en ce que** au moins un châssis de fixation (118) comprend une pièce de retenue (160) contre laquelle est maintenue la pièce, la pièce de retenue (160) étant rotative par rapport à la partie rotative (148) autour de l'axe de rotation (152).

41. Procédé selon une des revendications 23 à 40, **caractérisé en ce que** au moins un châssis de fixation (118) comprend un moteur d'entraînement en rotation (190) disposé sur le châssis de fixation (118) pour l'entraînement du mouvement de rotation de la pièce autour de l'axe de rotation (152).

42. Procédé selon une des revendications 23 à 41, **caractérisé en ce que** au moins un châssis de fixation (118) comprend un dispositif d'entraînement en rotation (246) pour l'entraînement du mouvement de rotation de la pièce autour de l'axe de rotation (152), et **en ce que** le dispositif de transport (110) comprend un moteur d'entraînement en rotation externe (210) qui est couplé avant le début de la rotation de la pièce autour de l'axe de rotation (152) au dispositif d'entraînement en rotation (246) de chaque châssis de fixation (118), et qui est découplé du dispositif d'entraînement en rotation (246) à la fin de la rotation de la pièce autour de l'axe de rotation (152).

43. Procédé selon la revendication 42, **caractérisé en ce que** le moteur d'entraînement en rotation externe (210) est déplacé pendant la rotation de la pièce autour de l'axe de rotation (152) le long de la direction de translation (112) du châssis de fixation (118).

44. Procédé selon une des revendications 42 ou 43, **caractérisé en ce que** le dispositif de transport (110) comprend un système d'accouplement (192) pour l'accouplement du moteur d'entraînement en rotation externe (210) avec le dispositif d'entraînement en rotation (246), l'accouplement du moteur d'entraînement en rotation externe (210) sur le dispositif d'entraînement en rotation (246) ayant lieu au moyen d'une barre d'accouplement (242) qui est commandée au moyen d'un dispositif de commande (234).
